# EUROPEAN PATENT APPLICATION

(11) **EP 4 635 652 A2**
(43) Date of publication of application: **22.10.2025**
(21) Application number: 25168766.1
(22) Date of filing: 07.04.2025
(51) Int. Cl.: B22F 10/20, B22F 10/25, B22F 10/28, B22F 10/36, B22F 12/33, B22F 12/44, B23K 26/064, B23K 26/06, B23K 26/067, B23K 26/073, B23K 26/342, B29C 64/153, B29C 64/277, B33Y 10/00, B33Y 30/00, G02B 3/00, G02B 3/06, G02B 26/02, G02B 26/06, G02B 26/08, G02F 1/01

(54) **ADDITIVE MANUFACTURING SYSTEM WITH OPTICAL MODULATOR FOR ADDITIVELY MANUFACTURING THREE-DIMENSIONAL OBJECTS**

(30) Priority: 16.04.2024 US 202418636737
(71) Applicant: General Electric Company, Schenectady, NY 12345 (US); Concept Laser GmbH, 96215 Lichtenfels (DE)
(72) Inventor: Zimmermann, Maik, 96215 Lichtenfels (DE); Simmermon, David Scott, West Chester, OH 45069 (US); Eichenberg, Boris, 96215 Lichtenfels (DE)
(74) Representative: Hafner & Kohl PartmbB

(57) **Abstract**

An additive manufacturing system for additively manufacturing a three-dimensional object includes a beam generation device and a first lens array disposed downstream from the beam generation device. The first lens array divides an energy beam received from the beam generation device into a plurality of beam segments. An optical modulator is disposed downstream from the first lens array and is modulated to reflect or transmit one or more beamlets from the plurality of beam segments incident on the optical modulator. A second lens array is disposed downstream from the optical modulator where the one or more beamlets are incident upon the second lens array. A focusing lens assembly is disposed downstream from the second lens array. The one or more beamlets projected from the second lens array become incident on the focusing lens assembly, and the focusing lens assembly converges the one or more beamlets in a target plane.

## Description

### FIELD

The present disclosure generally pertains to additive manufacturing systems, and more specifically, to additive manufacturing systems containing optical elements for adjusting an emitted beam.

### BACKGROUND

Three dimensional objects may be additively manufactured using a powder bed fusion process in which an energy beam generated by an irradiation device is directed onto a powder bed to melt or sinter sequential layers of powder material. The properties of the three-dimensional object formed by melting, fusing, or pre-heating the powder material may depend at least in part on one or more characteristics of the energy beam melting, sintering, or pre-heating the layers of powder material.

### BRIEF DESCRIPTION OF THE DRAWINGS

A full and enabling disclosure, including the best mode thereof, directed to one of ordinary skill in the art, is set forth in the specification, which makes reference to the appended Figures, in which:
FIGS. 1A and 1B schematically depict exemplary additive manufacturing systems or machines.
FIGS. 2A and 2B schematically depict further exemplary additive manufacturing systems or machines.
FIG. 3 schematically depicts an exemplary energy beam system with an arrangement of optical elements forming an exemplary irradiation device that may be included in an additive manufacturing machine.
FIG. 4 schematically depicts an exemplary energy beam system with another arrangement of optical elements forming an exemplary irradiation device that may be included in an additive manufacturing machine.
FIG. 5 schematically depicts an exemplary energy beam system with a linear arrangement of optical elements forming an exemplary irradiation device that may be included in an additive manufacturing machine.
FIG. 6A schematically depicts an exemplary optical modulator with a defined modulation state that may be included in an additive manufacturing machine.
FIG. 6B schematically depicts an exemplary intensity profile of a beam generated according to the modulation state depicted in FIG. 6A.
FIG. 7A schematically depicts an exemplary optical modulator with a defined modulation state that may be included in an additive manufacturing machine.
FIG. 7B schematically depicts an exemplary intensity profile of a beam generated according to the modulation state depicted in FIG. 7A.
FIG. 8 schematically depicts an exemplary optical modulator with a defined modulation state that may be included in an additive manufacturing machine.
FIG. 9 schematically depicts an exemplary energy beam system with an irradiation device that may be included in an additive manufacturing machine.
FIG. 10 schematically depicts an exemplary energy beam system with an irradiation device that may be included in an additive manufacturing machine.
FIG. 11 schematically depicts an exemplary energy beam system with an irradiation device that may be included in an additive manufacturing machine.
FIG. 12 schematically depicts an exemplary energy beam system with an irradiation device that may be included in an additive manufacturing machine.
FIG. 13 schematically depicts an exemplary energy beam system with an irradiation device that may be included in an additive manufacturing machine.
FIG. 14A schematically depicts an exemplary energy beam system with an irradiation device that may be included in an additive manufacturing machine.
FIG. 14B schematically depicts an exemplary energy beam system with an irradiation device that may be included in an additive manufacturing machine.
FIG. 15 schematically depicts an exemplary control system that may be configured to control an additive manufacturing system or machine.
FIG. 16 schematically depicts an exemplary method of additively manufacturing a three-dimensional object.

Repeat use of reference characters in the present specification and drawings is intended to represent the same or analogous features or elements of the present disclosure.

### DETAILED DESCRIPTION

Reference now will be made in detail to exemplary embodiments of the presently disclosed subject matter, one or more examples of which are illustrated in the drawings. Each example is provided by way of explanation and should not be interpreted as limiting the present disclosure. In fact, it will be apparent to those skilled in the art that various modifications and variations can be made in the present disclosure without departing from the scope of the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

It is understood that terms "upstream" and "downstream" refer to the relative direction with respect to a direction of an energy beam along a pathway or beam path. For example, "upstream" refers to the direction from which the energy beam emanates, and "downstream" refers to the direction to which the energy beam travels. It is also understood that terms such as "top", "bottom", "outward", "inward", and the like are words of convenience and are not to be construed as limiting terms. As used herein, the terms "first", "second", and "third" may be used interchangeably to distinguish one component from another and are not intended to signify location or importance of the individual components. The terms "a" and "an" do not denote a limitation of quantity, but rather denote the presence of at least one of the referenced item.

The present disclosure generally provides additive manufacturing machines and methods of additively manufacturing three-dimensional objects. Exemplary additive manufacturing machines and methods may utilize irradiation devices that emit an energy beam. For example, an additive manufacturing machine may operate with an energy beam that imparts a power density and/or intensity to the build plane commensurate with a conduction irradiation regime. As used herein, the term "conduction irradiation" or "conduction irradiation regime" refers to an irradiation regime in a powder bed fusion process in which heat is transferred into the powder bed predominately through heat conduction such that the thermal conductivity of the powder material is the limiting factor for the depth of the melt pool. The temperature of the melt pool with conduction irradiation generally remains below the vaporization temperature of the powder material. With a conduction irradiation regime, the width of a melt pool is typically much greater than the depth of the melt pool. A melt pool resulting from conduction irradiation may have an aspect ratio of less than about 1.0 (width/depth), such as from about 0.1 to about 1.0, such as from about 0.1 to about 0.5, or such as from about 0.5 to about 1.0. A melt pool resulting from conduction irradiation may have a depth of from about 10 micrometers (µm) to about 250 µm, such as from about 10 µm to about 50 µm, such as from about 50 µm to about 100 µm, or such as from about 100 µm to about 250 µm.

Conduction irradiation may be differentiated from penetration irradiation. As used herein, the term "penetration irradiation" or "penetration irradiation regime" refers to an irradiation regime in a powder bed fusion process in which the temperature of the melt pool exceeds the vaporization temperature of the powder material to an extent that an energy beam penetrates into a vapor capillary formed by expanding gasses releasing from the vaporizing power material. With penetration irradiation, the temperature of the melt pool adjacent to the vapor capillary generally exceeds the vaporization temperature of the powder material. With a penetration irradiation regime, the width of a melt pool is typically much smaller than the depth of the melt pool. A melt pool resulting from penetration irradiation may have an aspect ratio of greater than about 1.0 (width/depth), such as from about 1.0 to about 18.0, such as from about 1.0 to about 5.0, such as from about 5.0 to 10.0, or such as from about 10.0 to about 18.0. A melt pool resulting from penetration irradiation may have a depth of from about 100 µm to about 1 millimeter (mm), such as from about 100 µm to about 250 µm, such as from about 250 µm to about 500 µm, or such as from about 500 µm to about 800 µm.

Exemplary additive manufacturing machines may include an irradiation device and an optical modulator. The optical modulator may include a micromirror device, such as a digital micromirror device, or the like. A micromirror device may be configured as a micro-opto-electro-mechanical system that includes an integration of mechanical, optical, and electrical systems that involve manipulation of optical signals of very small sizes. An exemplary micromirror device may include a micromirror array made up of a plurality of micromirror elements respectively coupled to an addressable element. The addressable elements may be actuated to cause the corresponding micromirror element to move to respective ones of a plurality of modulation states. As used herein, the term "modulation state" refers to a position or orientation of a micromirror elements imparted by a corresponding addressable element, the position or orientation of the addressable element, or an electrical state of an addressable element. The term modulation state may be used with reference to one or more micromirror elements or with reference to a corresponding one or more addressable elements. By way of example, a micromirror element may be tilted in a first direction in a first modulation state, causing a beam segment reflected by the micromirror element to be directed in a first direction. Additionally, or in the alternative, a micromirror element may be tilted in a second direction in a second modulation state, causing a beam segment reflected by the micromirror element to be directed in a second direction. As used herein, the term "beam segment" refers to a cross-sectional portion of an energy beam propagating along an optical path toward or incident upon an optical modulator, and a "beamlet" refers to an energy beam that is reflected or transmitted by a respective addressable element of an optical modulator. It should be understood that embodiments of the present disclosure are not limited to micromirror devices, which are used to generate a amplitude modulation of a laser beam, and may also include phase modulators, such as liquid crystal on silicon, which use phase modulation to generate a pattern by interference.

An irradiation device with an optical modulator may be advantageously utilized with a conduction irradiation regime. The relatively lower intensity and/or power density associated with conduction irradiation may allow for the use of optical modulators with a relatively large pixel density, thereby allowing for increased resolution when irradiating the powder bed. The increased resolution realized by the present disclosure may be utilized to facilitate sophisticated irradiation strategies that provide for improved temperature control and/or improved material properties of three-dimensional objects formed during an additive manufacturing process. Additionally, or in the alternative, the increased resolution realized by the present disclosure may be utilized to produce three dimensional objects that have smaller features, improved surface properties, and/or greater dimensional tolerances.

In some embodiments, a plurality of beamlets may be combined to at least partially overlap with one another. The beamlets may be combined by way of a focusing lens assembly that includes one or more optical elements that have a particular configuration or arrangement that provides for their combination by way of the modulation state of the optical modulator causing the beamlets to propagate in a direction that provides for their combination. The respective modulation states may be coordinated with the configuration or arrangement of the focusing lens assembly.

One or more beamlets that are combined with one another may be described in association with an optical modulator by reference to a modulation group. As used herein, the term "modulation group" refers to a subset of micromirror elements or corresponding addressable elements of an optical modulator. In some embodiments, a modulation group may include a subset of micromirror elements or corresponding addressable elements of an optical modulator that are respectively actuated to a modulation state that causes a corresponding beamlet to become incident upon a focusing lens assembly or a build plane. In some embodiments, a modulation group may include a subset of micromirror elements or corresponding addressable elements of an optical modulator that are respectively actuated to a modulation state that causes the beamlets to be combined to at least partially overlap with one another at least at a combination zone. When a plurality of beamlets corresponding to a modulation group at least partially overlap with one another at a combination zone, such combination zone may coincide with a focal point of a focusing lens assembly of the irradiation device or a beam spot on the powder bed. An optical modulator may be described with reference to a plurality of modulation groups, with respective ones of the plurality of modulation groups including a corresponding subset of addressable elements or micromirror elements. The plurality of modulation groups may provide a corresponding plurality of subsets of beamlets, such as a corresponding plurality of subsets of beamlets that combine or at least partially overlap with one another at a combination zone. The combination of the beamlets corresponding to the respective modulation groups may provide a beam line or beam spot, which may also have a square or rectangular distribution or profile, with an increased intensity or power density relative to the intensity or power density of the energy beam upstream from the optical modulator, such as relative to the intensity or power density of the energy beam when emitted from a beam generation device or when incident upon the optical modulator. A combination zone corresponding to a modulation group may be directed onto the build plane in the form of a pattern, such as along the build plane, generated according to beam modulation instructions. For example, the pattern may include a linear beam line, a square beam spot, or a rectangular beam spot. The converged beamlets may propagate or be scanned across a build plane to irradiate build material on the build plane.

The beam spot may be scanned across a powder bed in a coordinated manner. The beam spot may be defined by a combination zone corresponding to a modulation group that includes a subset of addressable elements of the optical modulator. The beam spot may be scanned across the powder bed while respective addressable elements of the optical modulator may be modulated according to beam modulation instructions. The powder bed can be irradiated with good resolution while the beam spots are modulated by the optical modulator. With a conduction irradiation regime, heat transfer from adjacent beam spots are limited by the thermal conductivity of the powder material, and as such, the melt pool corresponding to respective beam spots can be substantially confined to specified build points of the powder bed. In some embodiments, the presently disclosed additive manufacturing machines may allow for a powder bed to be irradiated with a resolution that approaches or corresponds to a pixel density of the optical modulator. Additionally, or in the alternative, the presently disclosed additive manufacturing machines may allow for a powder bed to be irradiated with a resolution exhibiting a build point dimension that is smaller than a diameter of the energy beam emitted by an energy beam device. For example, the voxel dimension may correspond to the pixel density of the optical modulator.

As described herein, the presently disclosed subject matter involves the use of additive manufacturing machines or systems. As used herein, the term "additive manufacturing" refers generally to manufacturing technology in which components are manufactured in a piece-by-piece or a layer-by-layer manner. An exemplary additive manufacturing machine may be configured to utilize any suitable additive manufacturing technology. The additive manufacturing machine may utilize an additive manufacturing technology that includes a powder bed fusion (PBF) technology, such as a direct metal laser melting (DMLM) technology, a selective laser melting (SLM) technology, a directed metal laser sintering (DMLS) technology, or a selective laser sintering (SLS) technology. In an exemplary PBF technology, thin layers of powder material are sequentially applied to a build plane and then selectively melted or fused to one another in a layer-by-layer manner to form one or more three-dimensional objects. Additively manufactured objects are generally monolithic in nature and may have a variety of integral sub-components.

Additionally or alternatively suitable additive manufacturing technologies may include, for example, Fused Deposition Modeling (FDM) technology, Direct Energy Deposition (DED) technology, Laser Engineered Net Shaping (LENS) technology, Laser Net Shape Manufacturing (LNSM) technology, Direct Metal Deposition (DMD) technology, Digital Light Processing (DLP) technology, Vat Polymerization (VP) technology, Stereolithography (SLA) technology, and other additive manufacturing technologies that utilize an energy beam or other energy source to solidify an additive manufacturing material such as a powder material. In fact, any suitable additive manufacturing modality may be utilized with the presently disclosed the subject matter.

Additive manufacturing technology may generally be described as fabrication of objects by building objects point-by-point, line-by-line, or layer-by-layer, typically in a vertical direction. Other methods of fabrication are contemplated and within the scope of the present disclosure. For example, although the discussion herein refers to the addition of material to form successive layers, the presently disclosed subject matter may be practiced with any additive manufacturing technology or other manufacturing technology, including layer-additive processes, layer-subtractive processes, or hybrid processes.

The additive manufacturing processes described herein may be used for forming components using any suitable material. For example, the material may be metal, ceramic, polymer, epoxy, photopolymer resin, plastic, concrete, or any other suitable material that may be in solid, liquid, powder, sheet material, wire, or any other suitable form, or combinations thereof. Exemplary materials may include metals, polymers, or ceramics, as well as combinations thereof. Additionally, or in the alternative, exemplary materials may include metals, ceramics, or binders, as well as combinations thereof. Exemplary ceramics may include ultra-high-temperature ceramics, and/or precursors for ultra-high-temperature ceramics, such as polymeric precursors. Each successive layer of powder material. Each successive layer may be, for example, between about 10 µm and about 200 µm, although the thickness may be determined based on any number of parameters and may be any suitable size.

As used herein, the term "build plane" refers to a plane defined by a surface upon which an energy beam impinges during an additive manufacturing process. Generally, the surface of a powder bed defines the build plane. During irradiation of a respective layer of the powder bed, a previously irradiated portion of the respective layer may define a portion of the build plane, and/or prior to distributing powder material across a build module, a build plate that supports the powder bed generally defines the build plane.

Embodiments of the present disclosure provide an additive manufacturing machine or additive manufacturing projection apparatus for the generation of a homogeneous laser line, square beam spot, or rectangular beam spot intensity distribution with switchable beamlets using an optical modulator (e.g., a digital light processor, micromirror array, spatial light modulator, or the like). Pixel clusters of the programmable optical modulator are combined by an optical component arrangement and are superimposed homogeneously in an imaging plane which may be the powder plane in the build chamber of an additive manufacturing machine. By clustering the pixels and overlapping of beamlets in the target plane, the power per pixel on the powder bed can be concentrated. Embodiments of the present disclosure utilize a tandem micro lens array with the optical modulator between the tandem lens array. The lens array creates beamlets or beam channels whereas the intensity distribution of the beamlets can be individually controlled or combined via the optical modulator. The beamlets or beam channels are overlapped in the target plane via a projection lens, such as a Fourier lens, creating an intensity distribution with a homogeneous envelope. Additionally, embodiments of the present disclosure can be scaled up using multiple optical modulators in order to increase the overall power usage of the system.

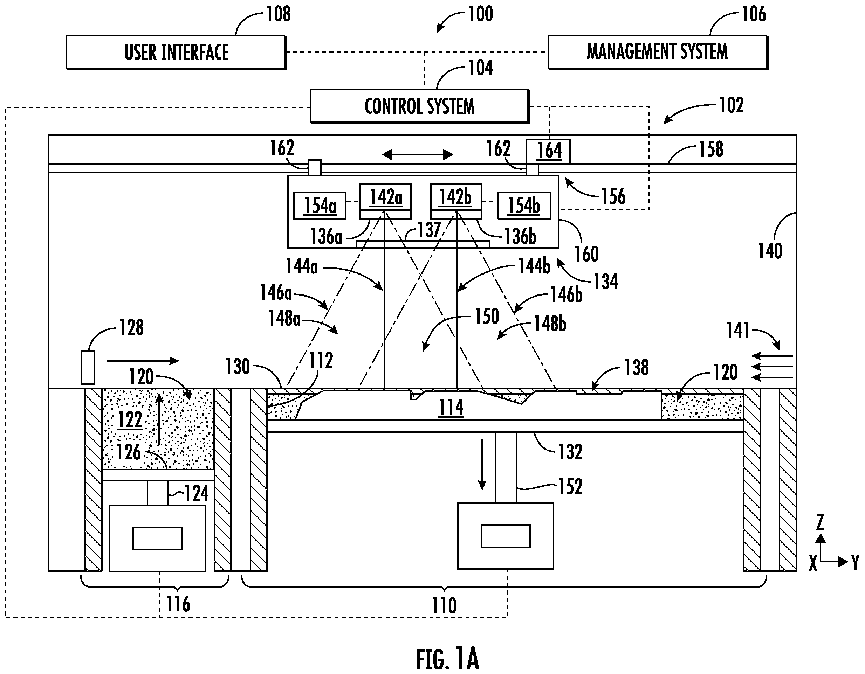

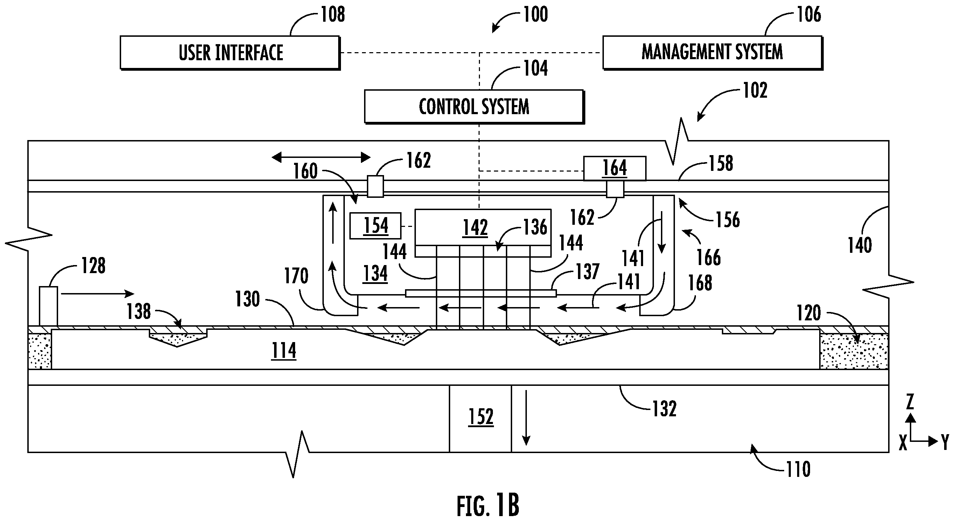

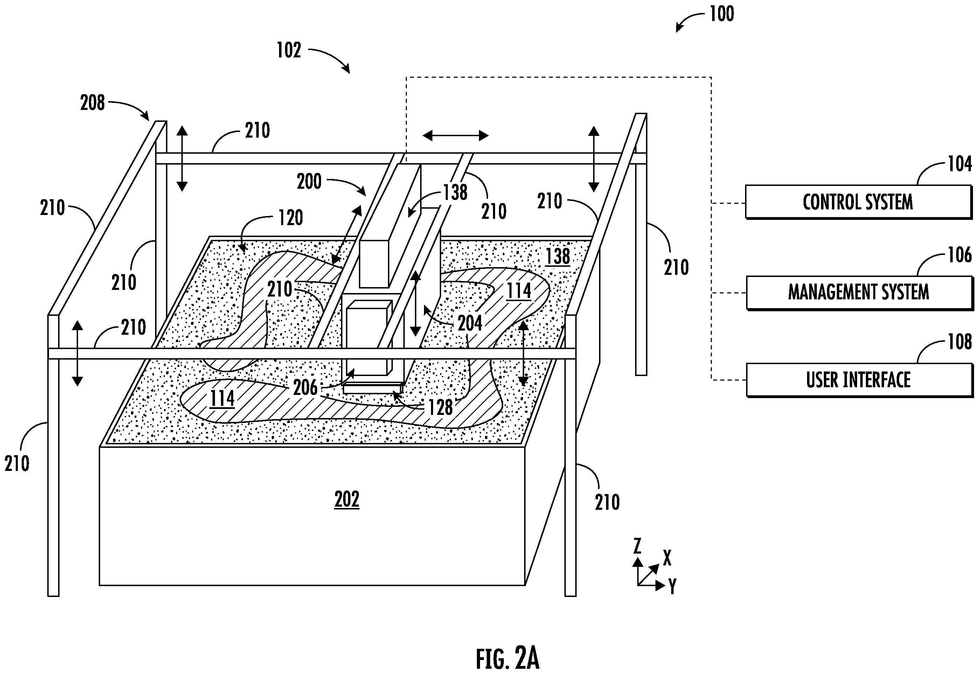

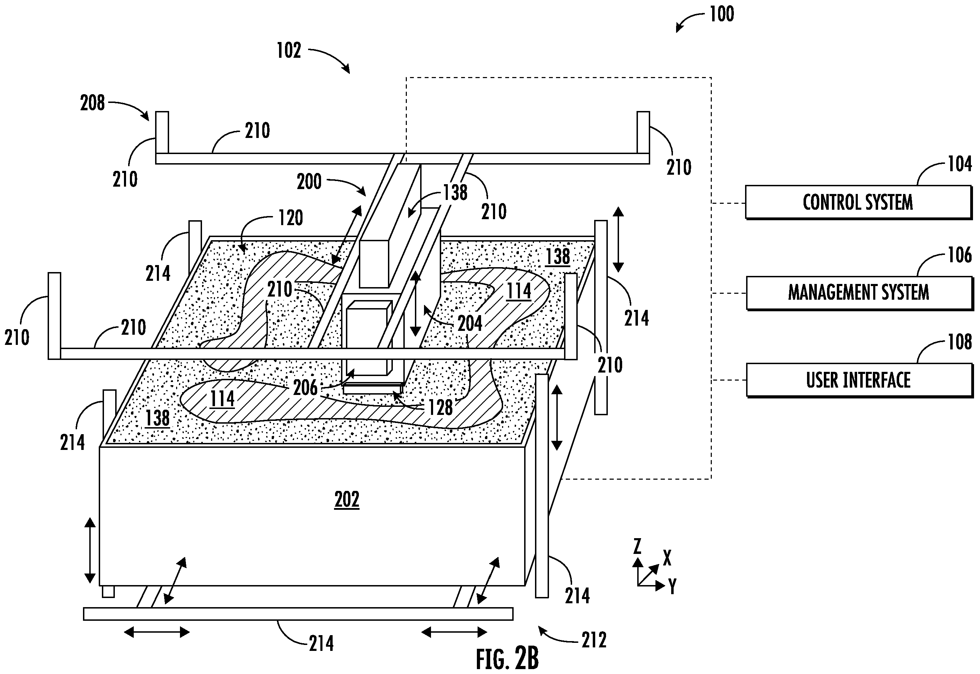

The presently disclosed subject matter will now be described in further detail. FIGS. 1A and 1B, and FIGS. 2A and 2B, schematically depict exemplary additive manufacturing systems 100. As shown, an additive manufacturing system 100 may include one or more additive manufacturing machines 102. It will be appreciated that the additive manufacturing systems 100 and additive manufacturing machines 102 shown in FIGS. 1A and 1B, and FIGS. 2A and 2B, are provided by way of example and not to be limiting. In fact, the subject matter of the present disclosure may be practiced with any suitable additive manufacturing system 100 and additive manufacturing machine 102 without departing from the scope of the present disclosure.

As shown, the one or more additive manufacturing machines 102 may include a control system 104. The control system 104 may be included as part of the additive manufacturing machine 102 or the control system 104 may be associated with the additive manufacturing machine 102. The control system 104 may include componentry integrated as part of the additive manufacturing machine 102 and/or componentry that is provided separately from the additive manufacturing machine 102. Various componentry of the control system 104 may be communicatively coupled to various componentry of the additive manufacturing machine 102.

The control system 104 may be communicatively coupled with a management system 106 and/or a user interface 108. The management system 106 may be configured to interact with the control system 104 in connection with enterprise-level operations pertaining to the additive manufacturing system 100. Such enterprise level operations may include transmitting data from the management system 106 to the control system 104 and/or transmitting data from the control system 104 to the management system 106. The user interface 108 may include one or more user input/output devices to allow a user to interact with the additive manufacturing system 100.

As shown, for example, in FIG. 1A, an additive manufacturing machine 102 may include a build module 110 that includes a build chamber 112 within which an object or objects 114 may be additively manufactured. An additive manufacturing machine 102 may include a powder module 116 that contains a supply of powder material 120 housed within a supply chamber 122. The build module 110 and/or the powder module 116 may be provided in the form of modular containers configured to be installed into and removed from the additive manufacturing machine 102 such as in an assembly-line process. Additionally, or in the alternative, the build module 110 and/or the powder module 116 may define a fixed componentry of the additive manufacturing machine 102.

The powder module 116 may include a powder piston 124 that actuates a powder supply floor 126 during operation of the additive manufacturing machine 102. As the powder supply floor 126 actuates, a portion of the powder material 120 is forced out of the powder module 116. A recoater 128 such as a blade or roller sequentially distributes thin layers of powder material 120 across a build plane 130 above the build module 110. A build platform 132 supports the sequential layers of powder material 120 distributed across the build plane 130. A build platform 132 may include a build plate (not shown) secured thereto and upon which an object 114 may be additively manufactured.

As shown, for example, in FIGS. 1A and 1B, an additive manufacturing machine 102 may include an energy beam system 134 configured to generate one or more of energy beams and to direct the respective energy beams onto the build plane 130 to selectively solidify respective portions of a powder bed 138 defining the build plane 130. The energy beams may be laser beams or beams from any other suitable energy source, such as LEDs or other light sources, and so forth. As the respective energy beams selectively melt or fuse the sequential layers of powder material 120 that define the powder bed 138, the object 114 begins to take shape. The one or more energy beams or laser beams may include electromagnetic radiation having any suitable wavelength or wavelength range, such as a wavelength or wavelength range corresponding to infrared light, visible light, and/or ultraviolet light.

Typically, with a DMLM, EBM, or SLM system, the powder material 120 is fully melted, with respective layers being melted or re-melted with respective passes of the energy beams. With DMLS or SLS systems, typically the layers of powder material 120 are sintered, fusing particles of powder material 120 to one another generally without reaching the melting point of the powder material 120. The energy beam system 134 may include componentry integrated as part of the additive manufacturing machine 102 and/or componentry that is provided separately from the additive manufacturing machine 102.

The energy beam system 134 may include one or more irradiation devices 142 configured to generate a plurality of energy beams 144 and to direct the energy beams 144 upon the build plane 130. As shown, for example, in FIG. 1A, an energy beam system 134 may include a plurality of irradiation devices 142, such as a first irradiation device 142 and a second irradiation device 142. The one or more irradiation devices may respectively include an energy beam source, a scanner, and optical assembly. The optical assembly may include a plurality of optical elements 136 configured to direct the energy beam onto the build plane 130. By way of example, the one or more optical elements 136 may include one more focusing lenses that focus an energy beam 144 on a build plane 130. Additionally, or in the alternative, the energy beam system 134 may include a window 137, such as a protective glass, that separates one or more components of the energy beam system 134 from the environment of a process chamber 140 within which powder material 120 is irradiated by the one or more energy beams 144 to additively manufacture a three-dimensional object 114.

A flow of inert process gas 141 may be supplied to the process chamber 140, for example, to remove contaminants such as fumes and soot from the process chamber 140 and/or to reduce the tendency of such contaminants to deposit on the on the window 137, optical elements 136, or other componentry of the energy beam system 134. Additionally, or in the alternative, the flow if inert process gas 141 may reduce the tendency of such contaminants to interfere with the energy beams 144 used to irradiate the powder material 120.

The plurality of energy beams 144 may become incident upon the build plane 130, for example, after passing through one or more optical elements 136 and/or a window 137 of the energy beam system 134. Additionally, or in the alternative, an irradiation device 142 may include a scanner configured to direct the plurality of energy beams 144 onto the powder bed 138. An exemplary scanner may include a galvo scanner, an electro-optic modulator, an acousto-optic modulator, a piezo-driven mirror, a polygon scanning head, or the like. To irradiate a layer of the powder bed 138, the one or more irradiation devices 142 respectively direct the plurality of energy beams 144 across the respective portions of the build plane 130 to melt or fuse the portions of the powder material 120 that are to become part of the object 114.

As shown in FIG. 1A, the energy beam system 134 may include a first irradiation device 142a and a second irradiation device 142b. The first irradiation device 142a may include a first optical assembly that includes a first one or more optical elements 136a, and/or the second irradiation device 142b may include a second optical assembly that includes a second one or more optical elements 136b. Additionally, or in the alternative, an energy beam system 134 may include three, four, six, eight, ten, or more irradiation devices, and such irradiation devices may respectively include an optical assembly that includes one or more optical elements 136. The plurality of irradiation devices 142 may be configured to respectively generate one or more energy beams that are respectively scannable within a scan field incident upon at least a portion of the build plane 130 to melt or fuse the portions of the powder material 120 that are to become part of the object 114. For example, the first irradiation device 142a may generate a first energy beam 144a that is scannable within a first scan field 146a incident upon at least a first build plane region 148a. The second irradiation device 142b may generate a second energy beam 144b that is scannable within a second scan field 146b incident upon at least a second build plane region 148b. The first scan field 146a and the second scan field 146b may overlap such that the first build plane region 148a scannable by the first energy beam 144a overlaps with the second build plane region 148b scannable by the second energy beam 144b. The overlapping portion of the first build plane region 148a and the second build plane region 148b may sometimes be referred to as an interlace region 150. Portions of the powder bed 138 to be irradiated within the interlace region 150 may be irradiated by the first energy beam 144a and/or the second energy beam 144b in accordance with the present disclosure.

To irradiate a layer of the powder bed 138, the one or more irradiation devices (e.g., the first irradiation device 142a and the second irradiation device 142b) respectively direct the plurality of energy beams (e.g., the first energy beam 144a and the second energy beam 144b) across the respective portions of the build plane 130 (e.g., the first build plane region 148a and the second build plane region 148b) to melt or fuse the portions of the powder material 120 that are to become part of the object 114. The first layer or series of layers of the powder bed 138 are typically melted or fused to the build platform 132, and then sequential layers of the powder bed 138 are melted or fused to one another to additively manufacture the object 114. As sequential layers of the powder bed 138 are melted or fused to one another, a build piston 152 gradually moves the build platform 132 to make room for sequential layers of powder material 120. As the build piston 152 gradually lowers and sequential layers of powder material 120 are applied across the build plane 130, the next sequential layer of powder material 120 defines the surface of the powder bed 138 coinciding with the build plane 130. Sequential layers of the powder bed 138 may be selectively melted or fused until a completed object 114 has been additively manufactured.

Still referring to FIGS. 1A and 1B, an additive manufacturing machine 102 may include an imaging system 154 configured to monitor one or more operating parameters of an additive manufacturing machine 102, one or more parameters of an energy beam system 134, and/or one or more operating parameters of an additive manufacturing process. The imaging system may a calibration system configured to calibrate one or more operating parameters of an additive manufacturing machine 102 and/or of an additive manufacturing process. The imaging system 154 may be a melt pool monitoring system. The one or more operating parameters of the additive manufacturing process may include operating parameters associated with additively manufacturing a three-dimensional object 114. The imaging system 154 may be configured to detect an imaging beam such as an infrared beam from a laser diode and/or a reflected portion of an energy beam (e.g., a first energy beam 144a and/or a second energy beam 144b).

An energy beam system 134 and/or an imaging system 154 may include one or more detection devices. The one or more detection devices may be configured to determine one or more parameters of an energy beam system 134, such as one or more parameters associated with irradiating the sequential layers of the powder bed 138 based at least in part on an assessment beam detected by the imaging system 154. One or more parameters associated with irradiating the sequential layers of the powder bed 138 may include irradiation parameters and/or object parameters, such as melt pool monitoring parameters. The one or more parameters determined by the imaging system 154 may be utilized, for example, by the control system 104, to control one or more operations of the additive manufacturing machine 102 and/or of the additive manufacturing system 100. The one or more detection devices may be configured to obtain assessment data of the build plane 130 from a respective assessment beam. An exemplary detection device may include a camera, an image sensor, a photo diode assembly, or the like. For example, a detection device may include charge-coupled device (e.g., a CCD sensor), an active-pixel sensor (e.g., a CMOS sensor), a quanta image device (e.g., a QIS sensor), or the like. A detection device may additionally include a lens assembly configured to focus an assessment beam along a beam path to the detection device. An imaging system 154 may include one or more imaging optical elements (not shown), such as mirrors, beam splitters, lenses, and the like, configured to direct an assessment beam to a corresponding detection device.

In addition, or in the alternative to determining parameters associated with irradiation the sequential layers of the powder bed 138, the imaging system 154 may be configured to perform one or more calibration operations associated with an additive manufacturing machine 102, such as a calibration operation associated with the energy beam system 134, one or more irradiation devices 142 or components thereof, and/or the imaging system 154 or components thereof. The imaging system 154 may be configured to project an assessment beam and to detect a portion of the assessment beam reflected from the build plane 130. The assessment beam may be projected by an irradiation device 142 and/or a separate beam source associated with the imaging system 154. Additionally, and/or in the alternative, the imaging system 154 may be configured to detect an assessment beam that includes radiation emitted from the build plane 130, such as radiation from an energy beam 144 reflected from the powder bed 138 and/or radiation emitted from a melt pool in the powder bed 138 generated by an energy beam 144 and/or radiation emitted from a portion of the powder bed 138 adjacent to the melt pool. The imaging system 154 may include componentry integrated as part of the additive manufacturing machine 102 and/or componentry that is provided separately from the additive manufacturing machine 102. For example, the imaging system 154 may include componentry integrated as part of the energy beam system 134. Additionally, or in the alternative, the imaging system 154 may include separate componentry, such as in the form of an assembly, that can be installed as part of the energy beam system 134 and/or as part of the additive manufacturing machine 102.

Still referring to FIGS. 1A and 1B, in some embodiments, an additive manufacturing machine may include a positioning system 156 configured to move an energy beam system 134 and/or one or more components thereof relative to the build plane 130. The positioning system 156 may be configured to move the energy beam system 134 and/or one or more components thereof to specified build coordinates and/or along specified build vectors corresponding to a cartesian coordinate system in accordance with control commands provided, for example, by the control system 104. The control commands may be provided, for example, to carry out operations of the one or more energy beam system 134 and/or of the additive manufacturing machine 102 in accordance with the present disclosure. The positioning system 156 may include one or more gantry elements 158 configured to move the energy beam system 134 and/or one or more components thereof across the powder bed. Respective gantry elements 158 may be configured to move the energy beam system 134 and/or one or more components thereof in one or more directions, such as an X-direction, a Y-direction, and/or a Z-direction. In some embodiments, the positioning system 156 may be coupled to a housing assembly 160 that contains one or more components of the energy beam system 134, such as one or more irradiation devices 142 and or one or more imaging systems 154. The housing assembly 160 may be coupled to one or more gantry elements 158 by one or more gantry mounts 162. The positioning system 156 may include a drive motor 164 configured to move the housing assembly 160 and/or the one or more components the energy beam system 134 according to instructions for the control system 104. The positioning system 156 may include componentry typically associated with a gantry system, such as stepper motors, drive elements, carriages, and so forth.

The energy beam system 134 may be positioned at any suitable location within the process chamber 140. Additionally, or in the alternative, the energy beam system 134 may be coupled to a perimeter wall of the process chamber 140. In some embodiments, as shown, for example, in FIG. 1B, an energy beam system 134 may be positioned in close proximity to the build plane 130. As shown in FIG. 1B, an inertization system 166 may supply a flow of inert process gas 141 to a region of the process chamber 140 between the energy beam system 134 and the powder bed 138. The inertization system 166 may include a supply manifold 168 and a return manifold 170. As shown in FIG. 1B, the supply manifold 168 and/or the return manifold 170 may be coupled to the housing assembly 160. With the supply manifold 168 and/or the return manifold 170 coupled to the housing assembly 160, a relatively small volume of space between the energy beam system 134 and the powder bed 138 may be inertized, as opposed to inertizing an entire process chamber 140. Additionally, or in the alternative, contaminants may have a shorter path to travel before being drawn into the return manifold 170 by the flow of inert process gas 141.

Referring now to FIGS. 2A and 2B, an additive manufacturing system 100 or additive manufacturing machine 102 may include one or more build units 200 configured to selectively solidify the powder material 120 to additively manufacture a three-dimensional object 114. In some embodiments, the additive manufacturing system 100 or additive manufacturing machine 102 may be configured for large format additive manufacturing. For example, one or more build units 200 may be configured to irradiate a powder bed 138 supported by a build vessel 202 that includes a cross-sectional area that exceeds the cross-sectional area of the one or more build units 200. Likewise, an object 114 additively manufactured with the additive manufacturing machine 102 may have a cross-sectional area that is larger than the one or more build units 200. The one or more build units 200 and/or the build vessel 202 may be movable relative to one another, for example, to perform large-format additive manufacturing operations.

As shown in FIGS. 2A and 2B, an exemplary build unit 200 may include an energy beam system 134 and an irradiation chamber 204. The build unit 200 may be configured to irradiate powder material 120 within a region of the powder bed coinciding the perimeter of the irradiation chamber 204. The one or more build units 200 may be movable relative to the build vessel 202, and/or the build vessel 202 may be movable relative to one or more build units 200. For example, a build unit 200 and/or a build vessel 202 may be movable in one or more directions, such as an X-direction, a Y-direction, and/or a Z-direction. Movement of the build unit 200 relative to the build vessel 202 may be configured to allow the build unit 200 to access various regions of the powder bed 138 so that the energy beam system 134 may irradiate the powder material 120 in respective regions. The energy beam system 134 may be configured as described with reference to FIGS. 1A and 1B. The energy beam system 134 may include one or more irradiation devices 142 and/or other components as described herein. The irradiation chamber 204 may be configured to provide an inert environment for irradiating the powder bed 138. A flow of inert process gas may be supplied to the irradiation chamber 204, for example, to remove contaminants such as fumes and soot from the irradiation chamber 204 and/or to reduce the tendency for such contaminants from depositing on the optical elements 136 and/or from interfering with the energy beams 144 used to irradiate the powder material 120. In some embodiments, a build unit 200 may include a powder supply hopper 206 configured to supply the powder material 120 to a build vessel 202. Additionally, or in the alternative, powder material 120 may be supplied by a powder module 116 as described with reference to FIG 1A.

As shown in FIGS. 2A and 2B, the one or more build units 200 may be operably coupled to a build unit-positioning system 208. The build unit-positioning system 208 may be configured to move the one or more build units 200 to specified build coordinates and/or along specified build vectors corresponding to a three-dimensional cartesian coordinate system in accordance with control commands provided, for example, by the control system 104. The control commands may be provided, for example, to carry out operations of the one or more build units 200 and/or the respective components thereof. The build unit-positioning system 208 may include one or more build unit-gantry elements 210 configured to movably support the one or more build units 200. The build unit-gantry elements 210 may include componentry typically associated with a gantry system, such as stepper motors, drive elements, carriages, and so forth. Respective build unit-gantry elements 210 may be configured to move the one or more build units 200 in one or more directions, such as an X-direction, a Y-direction, and/or a Z-direction.

As shown in FIG. 2B, the one or more build vessels 202 may be operably coupled to a build vessel-positioning system 212. The build vessel-positioning system 212 may be configured to move the build vessel 202 to specified build coordinates and/or along specified build vectors corresponding to a three-dimensional cartesian coordinate system in accordance with control commands provided, for example, by the control system 104. The control commands may be provided, for example, to carry out operations of the one or more build units 200 in accordance with the present disclosure. The build vessel-positioning system 212 may include one or more build vessel-gantry elements 214 configured to movably support the build vessel 202. Respective build vessel-gantry elements 214 may be configured to move the build vessel 202 in one or more directions, such as an X-direction, a Y-direction, and/or a Z-direction.

The one or more build vessels 202 may be operably coupled to the build vessel-positioning system 212 in addition to, or in the alternative to, one or more build units 200 operably coupled to the build unit-positioning system 208. For example, an additive manufacturing machine 102 may include the build vessel-positioning system 212 and one or more stationary build units 200. Additionally, or in the alternative, an additive manufacturing machine 102 may include the build vessel-positioning system 212 and the build unit-positioning system 208. The build vessel-positioning system 212 may be configured to move the build vessel 202 in one or more directions, and the build vessel-positioning system 212 may be configured to move the build vessel 202 in one or more directions. For example, the build vessel-positioning system 212 may be configured to move a build vessel 202 in an X-direction and/or a Y-direction. Additionally, or in the alternative, the build unit-positioning system 208 may be configured to move a build unit 200 in a Z-direction.

A build vessel-positioning system 212 may be configured to move a build vessel 202 horizontally while one or more build units 200 selectively irradiate portions of the powder material 120 in the build vessel 202. For example, the build vessel-positioning system 212 may be configured to move a build vessel 202 in accordance with an X-Y coordinate system. Additionally, or in the alternative, a build unit-positioning system 208 may be configured to move a build unit 200 horizontally while the build unit 200 selectively irradiates portions of the powder material 120 in the build vessel 202. For example, the build vessel-positioning system 212 may be configured to move a build vessel 202 in accordance with an X-Y coordinate system. A vertical position of the one or more build units 200 and/or the build vessel 202 may be augmented in connection with the addition of sequential layers of powder material 120 to the build vessel 202 and selective irradiation of the respective layers of powder material 120 in the build vessel 202. The build vessel-positioning system 212 may be configured to sequentially move the build vessel 202 vertically to provide room for the next sequential layer of powder material 120 to be added to the build vessel 202. Additionally, or in the alternative, the build unit-positioning system 208 may be configured to sequentially move a build unit 200 vertically to provide room for the next sequential layer of powder material 120 to be added to the build vessel 202. Movements of the build unit 200 and/or the build vessel 202 may be carried out before, during, or after, irradiating a sequential layer of powder material 120.

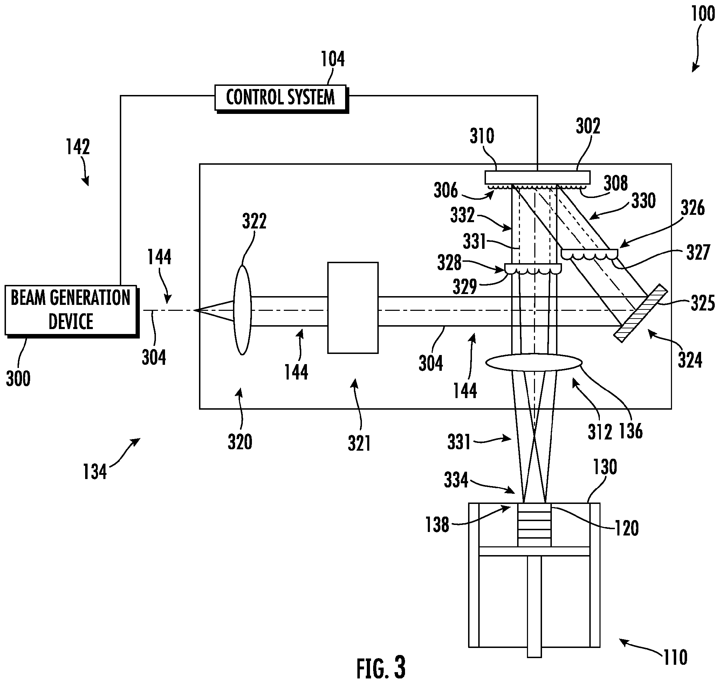

Now referring to FIG. 3, exemplary energy beam systems 134 and irradiation devices 142 are further described. The energy beam system 134 may include one or more irradiation devices 142. The irradiation devices 142 described herein may be utilized in an additive manufacturing system 100 (FIGS. 1A-1B and 2A-2B) and/or an additive manufacturing machine 102 (FIGS. 1A-1B and 2A-2B). Other uses are also contemplated. For example, exemplary irradiation device 142 may be utilized in laser welding systems, laser machining systems, laser ablation systems, laser cutting systems, laser drilling systems, laser micromanufacturing systems, and the like. As shown in FIG. 3, the exemplary irradiation device 142 may include one or more beam generation devices 300. In exemplary embodiments, the beam generation device 300 may comprise a fiber-coupled laser diode or a laser diode array. However, it should be understood that the beam generation device 300 may include other types of energy sources. It should be appreciated that the quantity, types, or both, of beam generation devices 300 used in the energy beam system 134 may vary. In the illustrated embodiment, the beam generation device 300 is configured to provide an energy beam 144. The energy beams 144 may be suitable for melting, sintering, or pre-heating, or any combination of the foregoing, the powder material 120. In exemplary embodiments, the power level, intensity, or both, of the energy beam 144 may be suitable for a conduction irradiation regime.

Referring to FIG. 3, the irradiation device 142 may also include a beam conditioning assembly 320 disposed downstream from the beam generation device(s) 300, and a beam shaping assembly 321 disposed downstream from the beam conditioning assembly 320. The energy beam 144 may follow a beam path 304 that coincides with an optical axis of the energy beam 144, extending from the beam generation device 300 to the beam conditioning assembly 320, and extending from the beam conditioning assembly 320 to the beam shaping assembly 321. **In** exemplary embodiments, the beam conditioning assembly 320 includes one or more optical elements configured to focus or otherwise condition the energy beam 144 prior to becoming incident upon the beam shaping assembly 321. **In** exemplary embodiments, the beam conditioning assembly 320 may include a beam collimator 322. The beam collimator 322 may include one or more lenses or other optical elements configured to collimate the energy beam 144. The beam shaping assembly 321 may comprise one or more lenses or optical elements increase or decrease a size of the energy beam 144. It should be appreciated that the beam shaping assembly 321 may comprise an optional component of the irradiation device 142 and, therefore, may be omitted from the irradiation device 142.

In exemplary embodiments, the irradiation device 142 may also include a beam steering assembly 324 disposed downstream from the beam conditioning assembly 320, a lens array 326 disposed downstream from the beam steering assembly 324, and optical modulator 302 disposed downstream from the lens array 326, a lens array 328 disposed downstream from the optical modulator 302, and a focusing lens assembly 312 disposed downstream from the lens array 328. **In** the illustrated embodiment, the energy beam 144 may follow the beam path 304 and become incident upon the beam steering assembly 324. The beam steering assembly 324 may comprise one or more optical elements 325 to steer or direct the energy beam 144 to become incident on the lens array 326. The beam steering assembly 324 may include a mirror, such as a bending mirror, or the like, to reflect the energy beam becoming incident on the lens array 326.

In exemplary embodiments, the lens array 326 includes a plurality of lenses 327 to divide the energy beam 144 into a plurality of beam segments 330 to become incident upon the optical modulator 302. The lens array 326 may also be referred to as a microlens array including a plurality of microlenses. The optical modulator 302 may include a micromirror array 306 that includes a plurality of micromirror elements 308 respectively coupled to an addressable element 310. The optical modulator 302 may be configured to direct one or more beamlets 331 toward the lens array 328 depending on a modulation state of respective addressable elements 310. The beamlet 331 may include one or more portions of a particular beam segment 330 that is reflected or transmitted by the optical modulator 302 to the lens array 328. For example, a particular beam segment 330 may become incident on one or more micromirror elements 308. Because each micromirror element 308 is separately addressable or controllable, all or a portion of the beam segment 330 may be reflected or transmitted by the optical modulator 302 to the lens array 328. Each portion of the beam segment 330 reflected or transmitted by the optical modulator 302 may be referred to herein as a "beamlet." Thus, the beam segments 330 become incident upon the micromirror array 306, and one or more beamlets 331 are directed to the lens array 328 depending on a modulation state of respective addressable elements 310. For example, in a particular modulation state, the addressable element 310 may cause a micromirror element 308 to direct the beamlet 331 corresponding to a particular beam segment 330 received from the lens array 326 along an irradiation beam path 332 leading to the lens array 328, but in a different modulation state, the addressable element 310 may cause the micromirror element 308 not to direct the corresponding beamlet 331 to the lens array 328. In exemplary embodiments, the lens array 328 includes a plurality of lenses 329 to receive the beamlets 331 from the optical modulator 302 and focus the received beamlets 331 to become incident upon the focusing lens assembly 312. In exemplary embodiments, the lens array 328 includes a plurality of lenses 329 to receive corresponding beamlets 331 from the optical modulator 302 and output the respective beamlets 331 to become incident upon the focusing lens assembly 312. The lens array 328 may also be referred to as a microlens array including a plurality of microlenses. In exemplary embodiments, the lens arrays 326 and 328 are each cylindrical lens arrays. In exemplary embodiments, the lens arrays 326 and 328 are each square lens arrays. It should also be understood that the lens arrays 326 and 328 may also be a combination of cylindrical and square lens arrays (e.g., the lens array 326 being a cylindrical lens array and the lens array 328 being a square lens array, or vice versa).

Beamlets 331 that propagate through the focusing lens assembly 312 may be utilized to irradiate the powder material 120 at the build plane 130. In the illustrated embodiment, the focusing lens assembly 312 includes one or more optical elements (e.g., optical element 136), such as lenses, mirrors, or the like, configured to focus respective beamlets 331 onto the build plane 130. For example, in exemplary embodiments, the focusing lens assembly 312 includes a projection lens, such as a Fourier lens, configured to focus the respective beamlets 331 onto the build plane 130. In exemplary embodiments, the optical modulator 302 reflects or transmits one or more of the beamlets 331 to the lens array 328 which then become incident upon the focusing lens assembly 312. Respective ones of the beamlets 331 may be associated with a respective modulation group that includes a corresponding subset of addressable elements 310. The focusing lens assembly 312 may cause the beamlets 331 corresponding to a respective modulation group to at least partially overlap with one another. For example, in exemplary embodiments, the focusing lens assembly 312 may cause the beamlets 331 corresponding to a respective modulation group to at least partially overlap with one another at one or more combination zones 334.

Embodiments of the present disclosure provide a homogenous or uniform power distribution across a cross-sectional profile of the combination zone 334 in at least one direction via the overlapped beamlets 331. Embodiments of the present disclosure utilize pixel clustering of the optical modulator 302 to create beamlets 331 having a defined intensity distribution, and the beamlets 331 are superimposed homogeneously in a target plane, such as the build plane 130. Using a tandem lens array arrangement via the lens arrays 326 and 328, with the optical modulator 302 between the lens arrays 326 and 328, channels of beamlets 331 are created where the intensity distribution of the channels of beamlets 331 can be used individually or combined by changing the modulation state of the optical modulator 302. By clustering the pixels of the optical modulator 302 and overlapping the beamlets 331 at a target plane, the power per pixel at the target plane can be increased. As described above, the beamlets 331 are overlapped at the target plane via the focusing lens assembly 312 to create an intensity distribution with a homogeneous envelope. Typically, energy beams may have a Gaussian power distribution even after having been collimated by a beam collimator. Embodiments of the present disclosure utilize the lens array 326 to provide a plurality of beam segments 330 that have a substantially uniform intensity, power level, or both. The pixels of the optical modulator 302 are controlled, such as by the control system 104, to direct select beamlets 331 toward the target plane via the lens array 328 and the focusing lens assembly 312, and the focusing lens assembly 312 combines or overlaps the select beamlets 331 at the target plane.

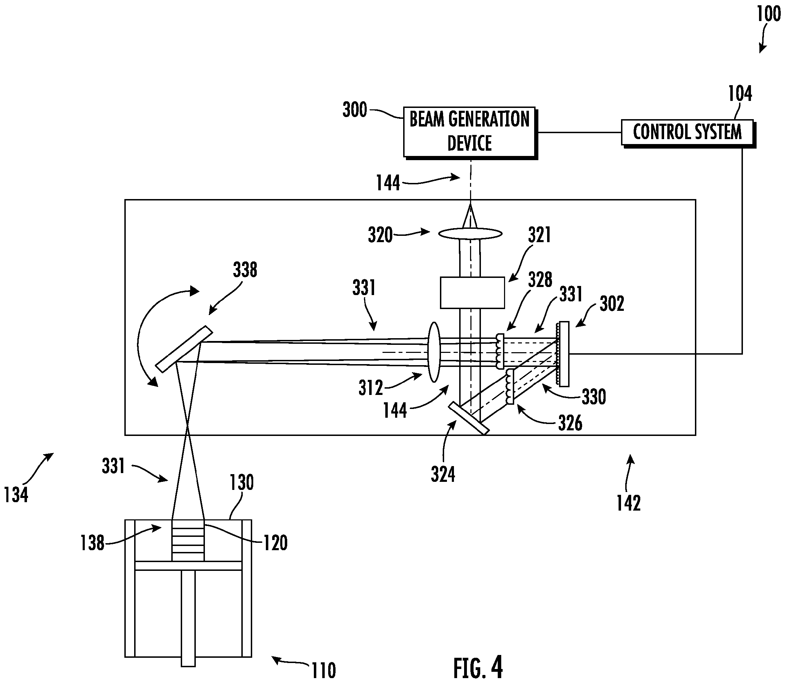

Additionally, or in the alternative, as shown in FIG. 4, the irradiation device 142 may include a scanner 338, such as a galvo-scanner, a MEMS scanner, or the like. The scanner 338 may be configured to direct the beamlets 331 along the build plane 130 to irradiate specified locations of the powder material 120 (e.g., at the powder bed 138. As shown in FIG. 3, the irradiation device 142 may be movable relative to the powder bed 138. For example, the irradiation device 142 may be coupled to one or more gantry elements 158 of a positioning system 156 configured to movably support the irradiation device 142 or one or more components thereof (FIGS. 1A-1B). Additionally, or in the alternative, as shown in FIG. 4, the irradiation device 142 may be stationary, and the scanner 338 may direct the beamlets 331 to various locations of the powder bed 138. Additionally, or in the alternative, the powder bed 138 may be movable relative to the irradiation device 142.

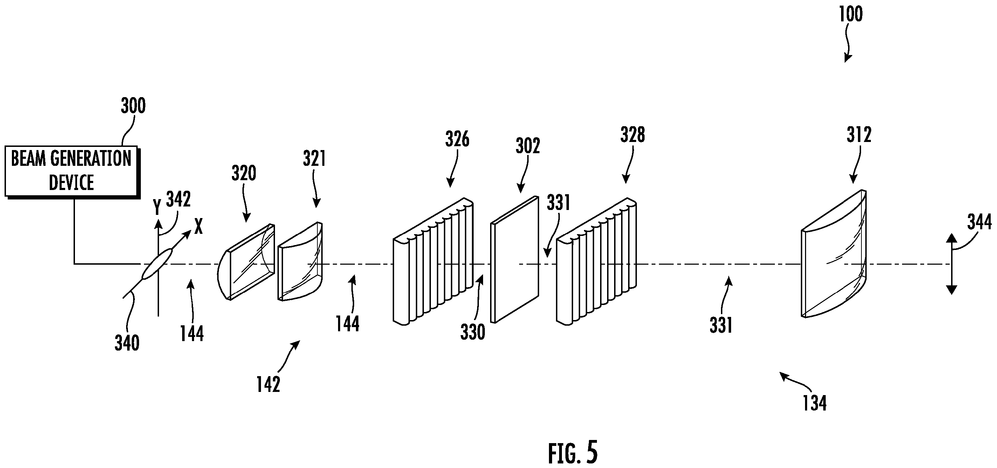

Referring to FIG. 5, the exemplary energy beam system 134 and irradiation device 142 are further described. FIG. 5 depicts the beam generation device 300 as one or more laser diodes integrated into one or more laser tubes or light-emitting units. The laser tube typically includes a single laser unit, and a light-emitting area in the X-axis 340 direction of the single laser tube is typically called the slow axis direction. The light-emitting area in the Y-axis 342 direction of the single laser tube is typically called the fast axis direction. In FIG. 5, the lens array 326 and the lens array 328 are each depicted as a cylindrical lens array. Disposed intermediate to the lens array 326 and the lens array 328 is the optical modulator 302. As described above, the optical modulator 302 may be a reflective optical modulator that reflects light beams such as, by way of non-limiting example, a reflective array of micromirrors, or a transmissive optical modulator that transmits light beams such as, by way or non-limiting example, a transmissive liquid crystal display (LCD) array, depending on the type, arrangement, or positioning of the various optical elements of the irradiation device 142. As described above, the beamlets 331 output from the optical modulator 302 are incident on the lens array 328, and the lens array 328 projects the beamlets 331 to become incident upon the focusing lens assembly 312. The focusing lens assembly 312 combines or overlaps the received beamlets 331 at a target or focusing plane 344, which may be the build plane 130 (FIGS. 1A-1B, 3, and 4) in an additive manufacturing system 100.

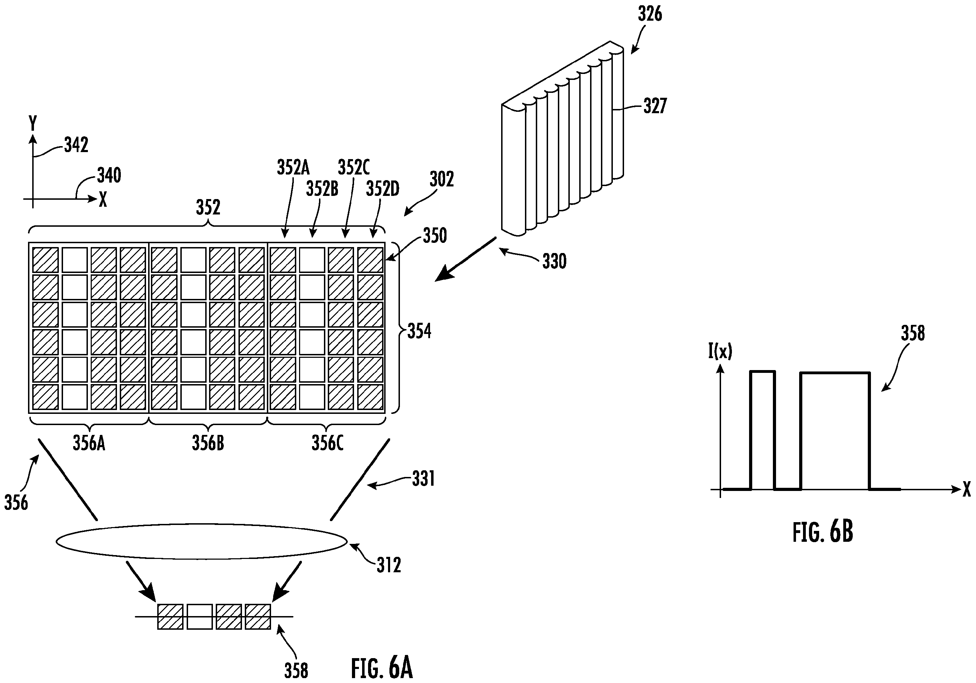

FIGS. 6A and 6B depict a pixelated laser line generation with pixel clustering in accordance with embodiments of the present disclosure using the exemplary energy beam system 134 and irradiation device 142. In the illustrated embodiment, laser line shaping in one direction is depicted such that the lens arrays 326 and 328 (FIGS. 3-5) each are cylindrical lens arrays (an exemplary embodiment of the lens array 326 is depicted in FIG. 6A as a cylindrical lens array). In the illustrated embodiment, the optical modulator 302 includes an array of pixels 350 arranged in one or more columns 352 and one or more rows 354. One or more of the pixels 350 within one or more columns 352 and one or more rows 354 may be further represented or defined as a pixel subgroup 356. In the illustrated embodiment, three pixel subgroups 356A, 356B, and 356C are depicted each including four columns 352 of pixels 350 and six rows 354 of pixels 350. However, it should be understood that a greater or fewer quantity of pixel subgroups 356 may be defined with a varying number of pixels 350. Each pixel subgroup 356 generally pertains to or represents a cylindrical lens or aperture of the cylindrical lens array (e.g., each pixel subgroup 356 generally pertains to or represents one of the lenses 327 of the lens array 326). Thus, each pixel subgroup 356 also receives or has incident thereupon one of the beam segments 330 (FIG. 3) from the lens array 326.

In FIG. 6A, the pixels 350 are depicted in either on "on" modulated state or an "off" modulated state. For example, in FIG. 6A, each pixel 350 in a column 352B of each pixel subgroup 356 is depicted in a modulated "on" state (depicted in a lighter shade in FIG. 6A), and each pixel 350 in columns 352A, 352C, and 352D of each pixel subgroup 356 is depicted in a modulated "off" state (depicted in a darker shade in FIG. 6A). In a modulated "on" state, the respective pixel 350 reflects or transmits a respective portion of the beam segment 330 (FIG. 3) incident thereupon to the focusing lens assembly 312 (e.g., via the lens array 328 (FIG. 3) - not depicted in FIG. 6A) as a particular beamlet 331. In a modulated "off" state, the portion of the beam segment 330 (FIG. 3) incident upon such pixel 350 is not reflected or transmitted to the lens array 328 (FIG. 3) or the focusing lens assembly 312. As depicted in FIG. 6A, the focusing lens assembly 312 combines or overlaps the respective beamlets 331 reflected or transmitted by the optical modulator 302 based on the modulated state of the respective pixels 350 to form a pixelated laser line 358 at the focusing plane 344 (FIG. 5). FIG. 6B depicts an intensity distribution of the laser line 358 corresponding to the overlapped or combined portion of the beamlets 331. As depicted in FIG. 6B, the laser line 358 is homogenized in the X-axis 340 direction and focused on the Y-axis 342 direction with an intensity distribution over the laser line 358 corresponding to the modulated state of the pixels 350. Thus, embodiments of the present disclosure cluster select pixels 350 of the optical modulator 302 and combine or overlap the beamlets 331 to shape and increase a power per pixel 350 in the focusing plane 344 (FIG. 5).

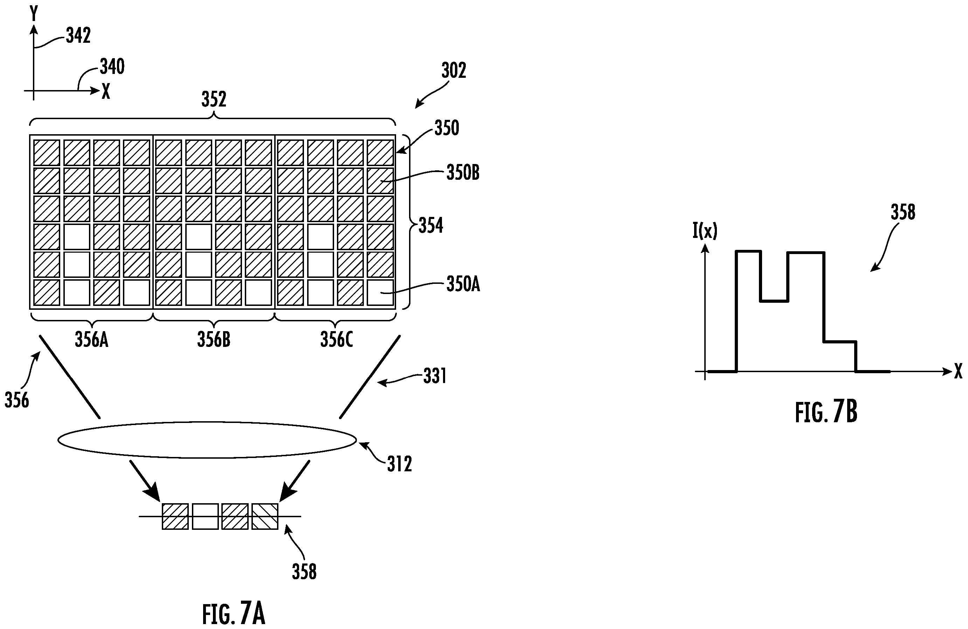

FIGS. 7A and 7B depict another exemplary laser line shaping and intensity distribution similar to as depicted in FIGS. 6A and 6B (e.g., using a cylindrical lens array) based on a different modulation state of certain pixels 350 of the optical modulator 302. Similar to as depicted in FIG. 6A, pixels 350 in a modulated "on" state are depicted in a lighter shade in FIG. 7A), and pixels 350 in a modulated "off" state are depicted in a darker shade in FIG. 7A. For example, pixel 350A is in a modulated "on" state, and pixel 350B is in a modulated "off" state. **In** a modulated "on" state, the respective pixel 350 reflects or transmits respective beamlets 331 to the focusing lens assembly 312 (e.g., via the lens array 328 (FIG. 3) - not depicted in FIG. 7A). In a modulated "off" state, the portion of the beam segment 330 (FIG. 3) incident upon such pixel 350 is not reflected or transmitted to the focusing lens assembly 312. As depicted in FIG. 7A, the focusing lens assembly 312 combines or overlaps the respective beamlets 331 reflected or transmitted by the optical modulator 302 based on the modulated state of the respective pixels 350 to form the pixelated laser line 358 at the focusing plane 344 (FIG. 5). FIG. 7B depicts an intensity distribution of the laser line 358 corresponding to the overlapped or combined portions of the beam segments 330 (FIG. 3) based on the modulated states of the pixels 350 of the optical modulator 302 in FIG. 7A. As depicted in FIG. 7B, the laser line 358 is homogenized in the X-axis 340 direction and focused on the Y-axis 342 direction with an intensity distribution over the laser line 358 corresponding to the modulated state of the pixels 350. Thus, embodiments of the present disclosure cluster select pixels 350 of the optical modulator 302 and combine or overlap the beamlets 331 to shape and increase a power per pixel 350 in the focusing plane 344 (FIG. 5).

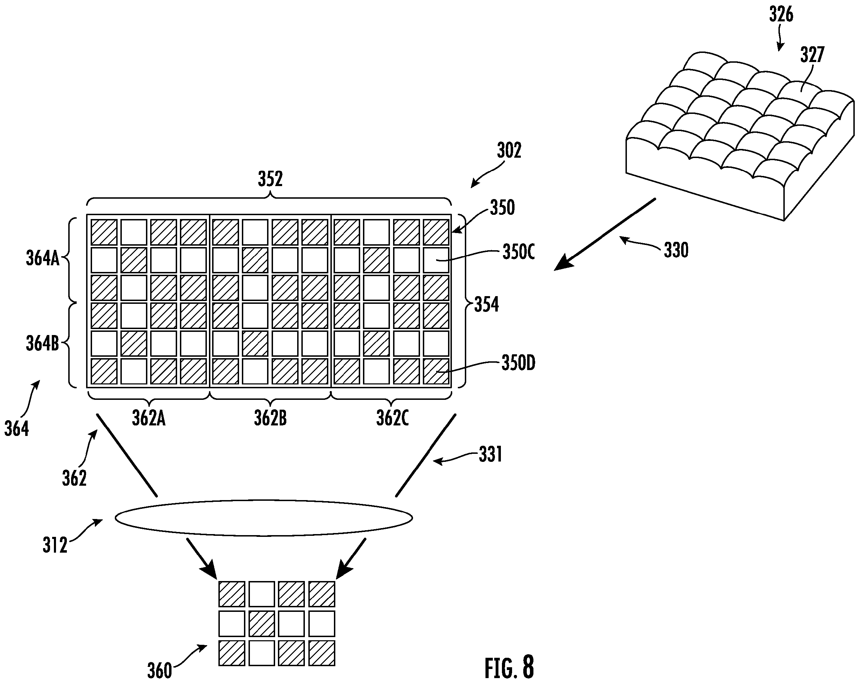

FIG. 8 depicts a pixelated rectangular laser beam spot 360 generation with pixel clustering in accordance with embodiments of the present disclosure using the exemplary energy beam system 134 and irradiation device 142. It should be understood that the pixelated rectangular laser beam spot 360 could also be a square beam spot. In the illustrated embodiment, laser beam shaping in two directions is depicted such that the lens arrays 326 and 328 (FIGS. 3-5) each are square lens arrays (an exemplary embodiment of the lens array 326 is depicted in FIG. 8 as a square lens array). In the illustrated embodiment, the optical modulator 302 includes an array or arrangement of pixels 350 arranged in one or more columns 352 and one or more rows 354. One or more of the pixels 350 within one or more columns 352 may be further represented or defined as a pixel subgroup column 362, and one or more of the pixels 350 within one or more rows 354 may be further represented or defined as a pixel subgroup row 364. In the illustrated embodiment, three pixel subgroup columns 362A, 362B, and 362C are depicted each including four columns 352 of pixels 350. In the illustrated embodiment, two pixel subgroup rows 364A and 364B are depicted each including three rows 354 of pixels 350. However, it should be understood that a greater or fewer quantity of pixel subgroup columns 362 and pixel subgroup rows 364 may be defined with varying quantities of pixels 350. Each pixel subgroup column 362 corresponding to a respective pixel subgroup row 364 generally pertains to or represents a square lens or aperture of the square lens array (e.g., the combination of the pixel subgroup column 362A and the pixel subgroup row 364A generally pertains to or represents one of the lenses 327 of the lens array 326. Thus, each combination of a respective pixel subgroup column 362 with a respective pixel subgroup row 364 also receives or has incident thereupon one of the beam segments 330 (FIG. 3) from the lens array 326.

In FIG. 8, the pixels 350 are depicted in either on "on" modulated state or an "off" modulated state. For example, pixels 350 depicted in a lighter shade in FIG. 8 are in a modulated "on" state, and pixels 350 depicted in a darker shade in FIG. 8 are in a modulated "off" state. For example, pixel 350C is in a modulated "on" state, and pixel 350D is in a modulated "off" state. In a modulated "on" state, the respective pixel 350 reflects or transmits a respective beamlet 331 to the focusing lens assembly 312 (e.g., via the lens array 328 (FIG. 3) - not depicted in FIG. 8). In a modulated "off" state, the portion of the beam segment 330 (FIG. 3) incident upon such pixel 350 is not reflected or transmitted to the focusing lens assembly 312. As depicted in FIG. 8, the focusing lens assembly 312 combines or overlaps the respective beamlets 331 reflected or transmitted by the optical modulator 302 based on the modulated state of the respective pixels 350 to form the pixelated rectangular laser beam spot 360 at the focusing plane 344 (FIG. 5). The intensity distribution within the pixelated rectangular laser beam spot 360 corresponds to the modulated state of the pixels 350 of the optical modulator 302 from the combined or overlapped beamlets 331 by the focusing lens assembly 312.

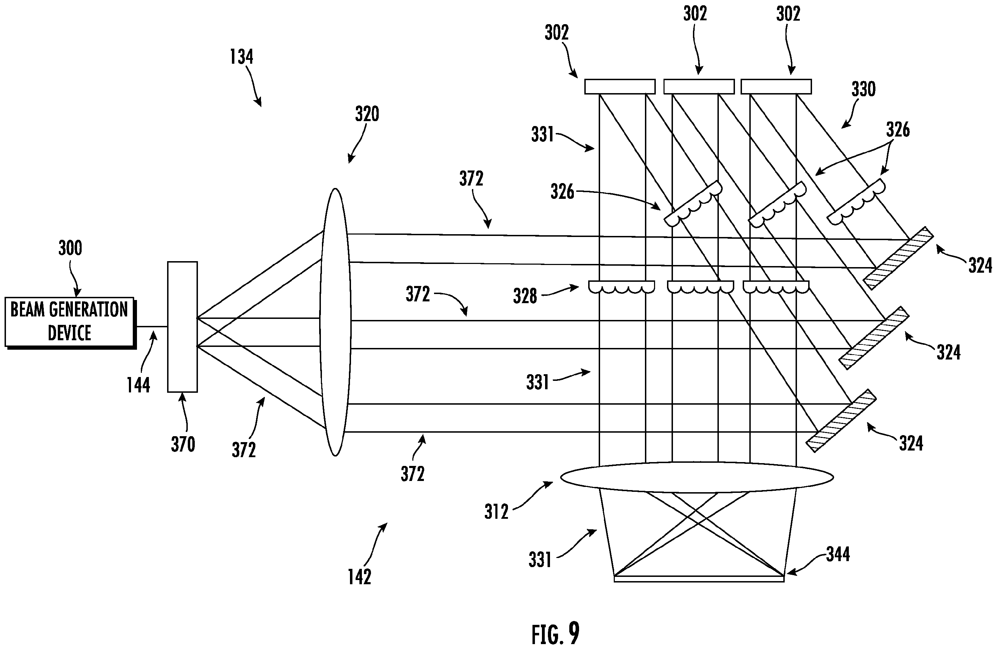

FIG. 9 is a schematic diagram depicting a scaled embodiment of the exemplary energy beam system 134 and irradiation device 142 according to the present disclosure. In the illustrated embodiment, the exemplary energy beam system 134 and irradiation device 142 includes a beam splitter 370 disposed downstream from the beam generation device 300 and upstream from the beam conditioning assembly 320. The beam splitter 370 receives the energy beam 144 from the beam generation device 300 and splits or separates the energy beam 144 into a plurality of energy sub-beams 372. In the illustrated embodiment, each energy sub-beam 372 is incident upon a respective beam steering assembly 324 which steers the respective energy sub-beam 372 to become incident upon a respective lens array 326. Similar to as described above in connection with FIGS. 3-8, the lens arrays 326 divide each energy sub-beam 372 into corresponding respective beam segments 330 which are incident upon a respective optical modulator 302. Each optical modulator 302, based on its modulation state, reflects or transmits one or more beamlets 331 to become incident upon a respective lens array 328, which then projects the respective beamlets 331 to become incident upon the focusing lens assembly 312. Similar to as described above in connection with FIGS. 3-8, the focusing lens assembly 312 combines or overlaps the received beamlets 331 at the focusing plane 344. Thus, using a plurality of optical modulators 302 also enables an increase in power or intensity of the laser beam spot or profile at a target plane. It should be understood that the quantity of optical modulators 302, lens arrays 326 and 328, and beam steering assemblies 324 may vary. Although the energy sub-beams 372 and the beamlets 331 appear to overlap or interfere with various optical components depicted in FIG. 9 because of its illustration in two dimensions, it should be understood that the arrangement of the optical components may be folded or arranged in three-dimensional space so that the energy sub-beams 372 and the beamlets 331 do not interfere with each other or intersect with unintended optical components.

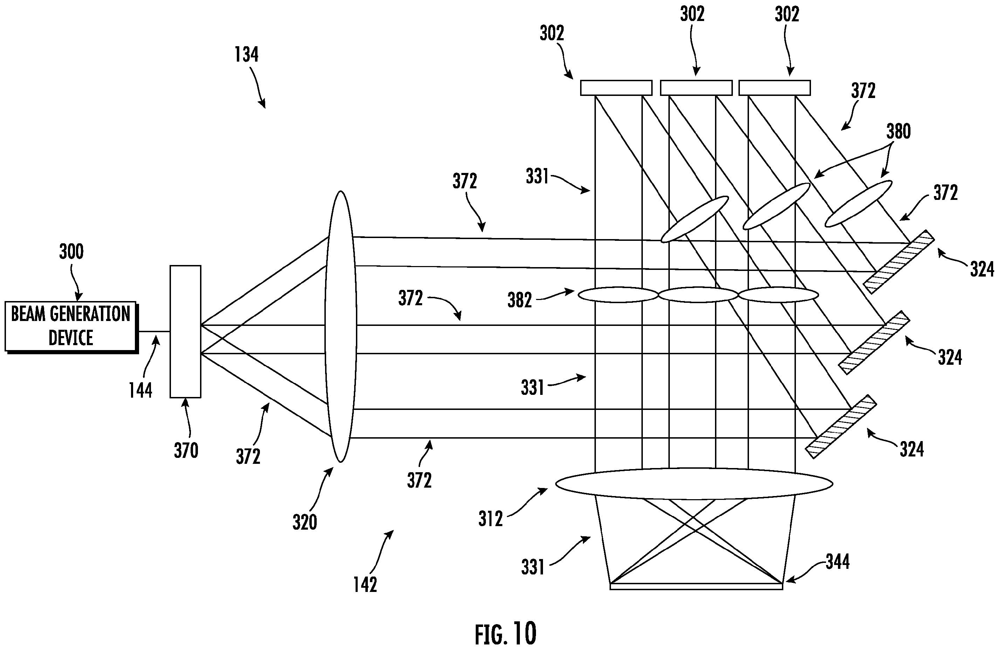

FIG. 10 is a schematic diagram depicting another scaled embodiment of the exemplary energy beam system 134 and irradiation device 142 according to the present disclosure. In the illustrated embodiment, an array of lenses 380 are disposed upstream from an array of optical modulators 302, and an array of lenses 382 are disposed downstream from the array of optical modulators. In the illustrated embodiment, the exemplary energy beam system 134 and irradiation device 142 includes the beam splitter 370 disposed downstream from the beam generation device 300 and upstream from the beam conditioning assembly 320. The beam splitter 370 receives the energy beam 144 from the beam generation device 300 and splits or separates the energy beam 144 into a plurality of energy sub-beams 372. In the illustrated embodiment, each energy sub-beam 372 is incident upon a respective beam steering assembly 324 which steers the respective energy sub-beam 372 to become incident upon a respective lens 380. Each respective lens 380 projects a respective energy sub-beam 372 to become incident upon a respective optical modulator 302. Each optical modulator 302, based on its modulation state, reflects or transmits one or more beamlets 331 to become incident upon a respective lens 382, which then projects the respective beamlet 331 to become incident upon the focusing lens assembly 312. Similar to as described above in connection with FIGS. 3-9, the focusing lens assembly 312 combines or overlaps the received beamlets 331 at the focusing plane 344. Thus, using a plurality of optical modulators 302 also enables an increase in power or intensity of the laser beam spot or profile at a target plane. In the illustrated embodiments, individual lenses 380 and 382 are utilized instead of lens arrays. Similar to as described above in connection with FIG. 9, although the energy sub-beams 372 and the beamlets 331 appear to overlap or interfere with various optical components depicted in FIG. 9 because of its illustration in two dimensions, it should be understood that the arrangement of the optical components may be folded or arranged in three-dimensional space so that the energy sub-beams 372 and the beamlets 331 do not interfere with each other or intersect with unintended optical components.

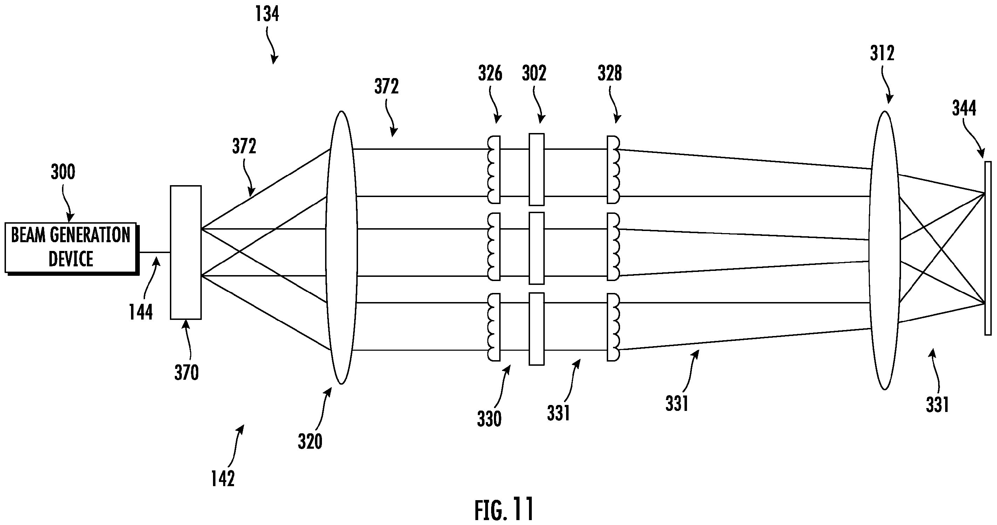

FIG. 11 is a schematic diagram depicting another scaled embodiment of the exemplary energy beam system 134 and irradiation device 142 according to the present disclosure. In the illustrated embodiment, the exemplary energy beam system 134 and irradiation device 142 includes the beam splitter 370 disposed downstream from the beam generation device 300 and upstream from the beam conditioning assembly 320. The beam splitter 370 receives the energy beam 144 from the beam generation device 300 and splits or separates the energy beam 144 into the plurality of energy sub-beams 372. In the illustrated embodiment, each energy sub-beam 372 is incident upon a respective lens array 326. Similar to as described above in connection with FIGS. 3-9, the lens arrays 326 divide each energy sub-beam 372 into corresponding respective beam segments 330 which are incident upon a respective optical modulator 302. In the illustrated embodiment, each optical modulator 302 is a transmissive optical modulator. Each optical modulator 302, based on its modulation state, transmits or outputs one or more beamlets 331 to become incident upon a respective lens array 328, which then projects the respective beamlets 331 to become incident upon the focusing lens assembly 312. Similar to as described above in connection with FIGS. 3-10, the focusing lens assembly 312 combines or overlaps the received beamlets 331 at the focusing plane 344. Thus, using a plurality of optical modulators 302 also enables an increase in power or intensity of the laser beam spot or profile at a target plane. It should be understood that the quantity of optical modulators 302 and lens arrays 326 and 328 may vary.

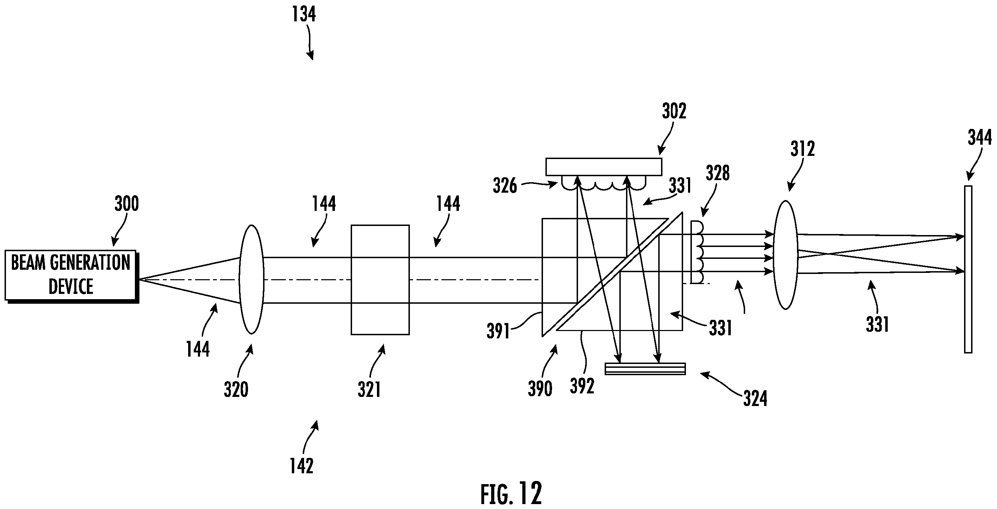

FIG. 12 is a schematic diagram depicting a compact arrangement of the exemplary energy beam system 134 and irradiation device 142 according to the present disclosure. The exemplary energy beam system 134 and irradiation device 142 is similar to as described in FIG. 3 including the beam generation device 300, the beam conditioning assembly 320, the beam shaping assembly 321, the lens arrays 326 and 328, the optical modulator 302, and the focusing lens assembly 312. In FIG. 12, a prism assembly 390 is disposed between lens arrays 326 and 328. In FIG. 12, the prism assembly 390 includes a prism 391 and a prism 392 forming an inline total internal reflection (TIR) prism assembly. The energy beam 144 leaves the beam shaping assembly 321 and is incident upon the prism 391 which reflects the energy beam 144 to be incident upon the lens array 326. The lens array 326 divides the energy beam 144 into the beam segments 330 which are then incident upon the optical modulator 302. Based on a modulation state of the optical modulator 302, one or more beamlets 331 are directed through the prisms 391 and 392 to become incident upon the beam steering assembly 324 which reflects the one or more beamlets 331 to the prism 392. The one or more beamlets 331 are reflected by the prism 392 to the lens array 328 which projects the one or more beamlets 331 onto the focusing lens assembly 312. Similar to as described above in connection with FIGS. 3-11, the focusing lens assembly 312 combines or overlaps the received beamlets 331 at the focusing plane 344. Thus, it should be understood that embodiments of the present disclosure may utilize TIR prisms, reverse total internal reflection (RTIR) prisms, or the like, to provide a compact arrangement of the energy beam system 134 and irradiation device 142.

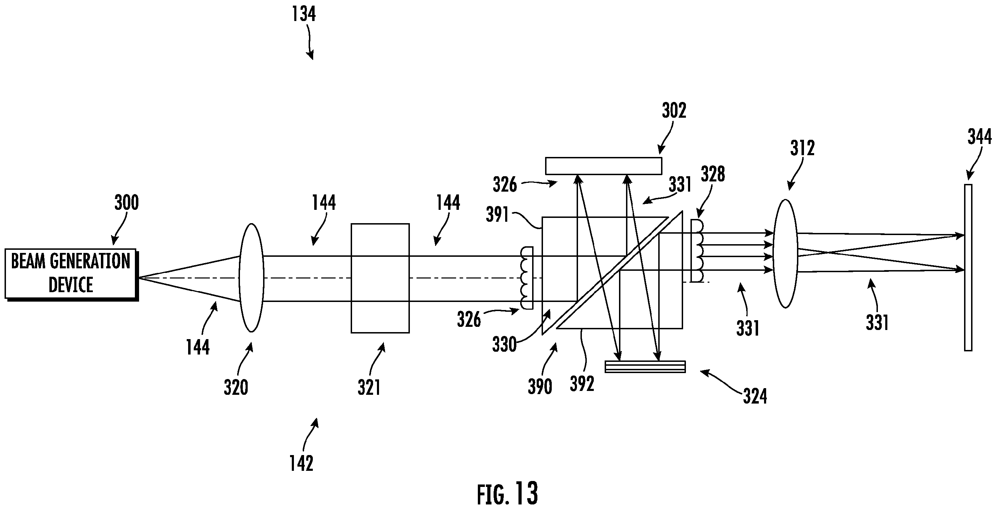

FIG. 13 is a schematic diagram depicting another compact arrangement of the exemplary energy beam system 134 and irradiation device 142 according to the present disclosure. The exemplary energy beam system 134 and irradiation device 142 is similar to as described in FIG. 12 including the beam generation device 300, the beam conditioning assembly 320, the beam shaping assembly 321, the lens arrays 326 and 328, the optical modulator 302, the focusing lens assembly 312, and the prism assembly 390. In FIG. 13, a prism assembly 390 is disposed downstream of the lens array 326. In FIG. 13, the energy beam 144 leaves the beam shaping assembly 321 and is incident upon the lens array 326 which divides the energy beam 144 into the beam segments 330 which are then incident upon the prism 391. The prism 391 reflects the beam segments 330 to be incident upon the optical modulator 302. Based on a modulation state of the optical modulator 302, one or more beamlets 331 are directed through the prisms 391 and 392 to become incident upon the beam steering assembly 324 which reflects the one or more beamlets 331 to the prism 392. The one or more beamlets 331 are reflected by the prism 392 to the lens array 328 which projects the one or more beamlets 331 onto the focusing lens assembly 312. Similar to as described above in connection with FIGS. 3-11, the focusing lens assembly 312 combines or overlaps the received beamlets 331 at the focusing plane 344.

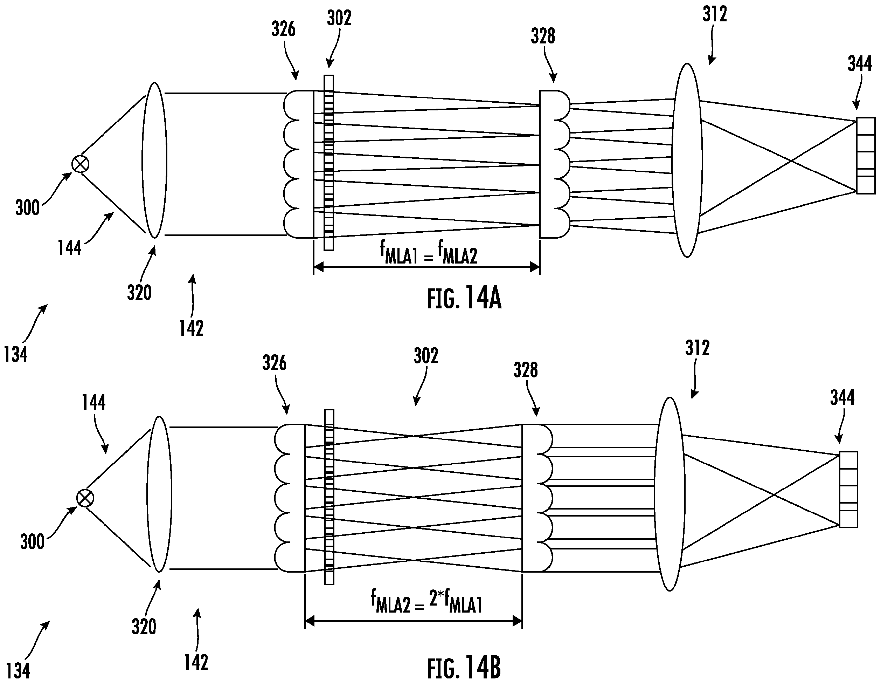

FIGS. 14A and 14B are schematic diagrams depicting various placements or positions of the optical modulator 302 with respect to the lens arrays 326 and 328 of the exemplary energy beam system 134 and irradiation device 142 according to the present disclosure based on focal lengths of the lens arrays 326 and 328. In FIG. 14A, the focal length of lens array 326 (depicted as f_{MLA1} in FIGS. 14A and 14B) is equal to, or substantially equal to, the focal length of the lens array 328 (depicted as f_{MLA2} in FIGS. 14A and 14B). In exemplary embodiments, the optical modulator 302 is positioned at or near the focal length of the lens array 328 downstream from the lens array 326. In FIG. 14B, the focal length of the lens array 328 is different than the focal length of the lens array 326. In FIG. 14B, the focal length of the lens array 328 is a factor of two greater than the focal length of the lens array 326. It should be understood that other focal length differences may be utilized. In exemplary embodiments, because of the different focal lengths of the lens arrays 326 and 328, the optical modulator 302 is positioned at or near the front focal length (i.e., the direction toward the lens array 326) of the lens array 328 downstream from the lens array 326. The positioning of the optical modulator 302 downstream of the lens array 326 may be optimized directionally between the lens arrays 326 and 328 to accommodate various aspects or characteristics of the energy beam 144 or the beam generation devices 300.

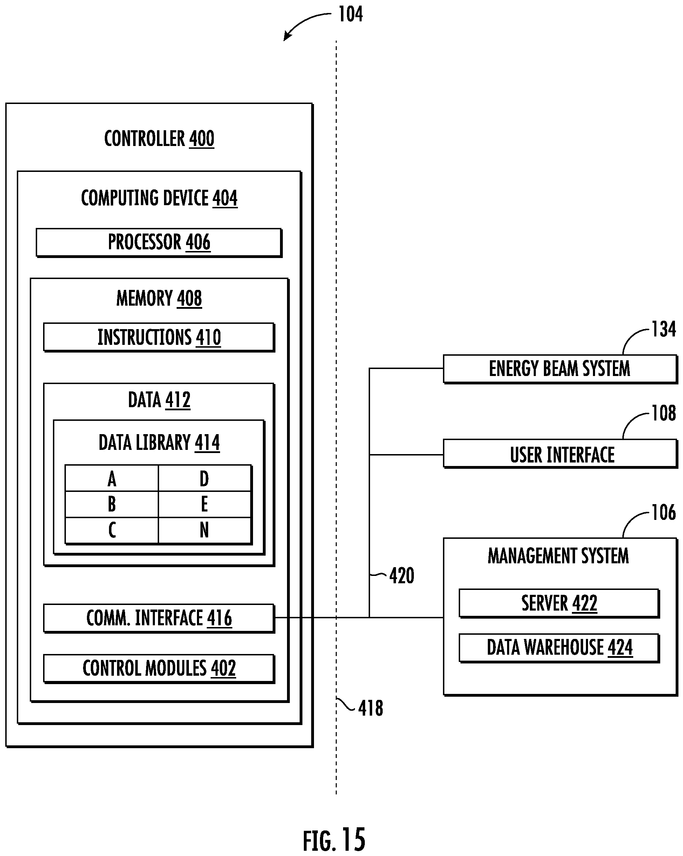

Now turning to FIG. 15, and exemplary control system 104 will be described. The control system 104 may be configured to perform one or more control operations associated with an additive manufacturing system 100 and/or an additive manufacturing machine 102. The control operations may include, one or more control commands may be configured to control operations of an energy beam system 134, including, for example, control operations of one or more irradiation devices 142 and/or one or more optical modulators 302 included in a respective irradiation device 142.

As shown in FIG. 15, an exemplary control system 104 may include a controller 400. The controller may include one or more control modules 402 configured to cause the controller 400 to perform one or more control operations. The one or more control modules 402 may include control logic executable to provide control commands configured to control one or more controllable components associated with an additive manufacturing machine 102, such as controllable components associated with an energy beam system 134, one or more irradiation devices 142, one or more optical modulators 302, or any combination of the foregoing. For example, a control module 402 may be configured to provide one or more control commands executable to control operation of one or more components of an irradiation device 142, such as operation of the beam generation device 300, the optical modulator 302, or any one or more other components thereof.

The controller 400 may be communicatively coupled with an additive manufacturing machine 102. The controller 400 may be communicatively coupled with one or more components of an additive manufacturing machine 102, such as one or more components of an energy beam system 134 or an irradiation device 142, such as the beam generation device 300, the optical modulator 302, or any one or more other elements thereof. The controller 400 may also be communicatively coupled with a management system 106, a user interface 108, or both.

The controller 400 may include one or more computing devices 404, which may be located locally or remotely relative to an additive manufacturing machine 102, the energy beam system 134, the irradiation device 142, or any combination of the foregoing. The one or more computing devices 404 may include one or more processors 406 and one or more memory devices 408. The one or more processors 406 may include any suitable processing device, such as a microprocessor, microcontroller, integrated circuit, logic device, or other suitable processing device. The one or more memory devices 408 may include one or more computer-readable media, including but not limited to non-transitory computer-readable media, RAM, ROM, hard drives, flash drives, and/or other memory devices 408.

As used herein, the terms "processor" and "computer" and related terms, such as "processing device" and "computing device", are not limited to just those integrated circuits referred to in the art as a computer, but broadly refers to a microcontroller, a microcomputer, a programmable logic controller (PLC), an application specific integrated circuit, and other programmable circuits, and these terms are used interchangeably herein. A memory device 408 may include, but is not limited to, a non-transitory computer-readable medium, such as a random access memory (RAM), and computer-readable nonvolatile media, such as hard drives, flash memory, and other memory devices. Alternatively, a floppy disk, a compact disc-read only memory (CD-ROM), a magneto-optical disk (MOD), and/or a digital versatile disc (DVD) may also be used.

As used herein, the term "non-transitory computer-readable medium" is intended to be representative of any tangible computer-based device implemented in any method or technology for short-term and long-term storage of information, such as, computer-readable instructions, data structures, program modules and sub-modules, or other data in any device. The methods described herein may be encoded as executable instructions embodied in a tangible, non-transitory, computer readable media, including, without limitation, a storage device and/or a memory device. Such instructions, when executed by a processor, cause the processor to perform at least a portion of the methods described herein. Moreover, as used herein, the term "non-transitory computer-readable medium" includes all tangible, computer-readable media, including, without limitation, non-transitory computer storage devices, including, without limitation, volatile and nonvolatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

The one or more memory devices 408 may store information accessible by the one or more processors 406, including computer-executable instructions 410 that can be executed by the one or more processors 406. The instructions 410 may include any set of instructions which when executed by the one or more processors 406 cause the one or more processors 406 to perform operations, including beam modulation operations, calibration operations, and/or additive manufacturing operations. Additionally, or in the alternative, the instructions, when executed by the one or more processors 406, may cause the one or more processors 406 to perform an irradiation sequence as described herein, including, for example, an irradiation sequence that includes a modulation cycle as described herein.

The memory devices 408 may store data 412 accessible by the one or more processors 406. The data 412 can include current or real-time data 412, past data 412, or a combination thereof. The data 412 may be stored in a data library 414. As examples, the data 412 may include data 412 associated with or generated by an additive manufacturing system 100 or an additive manufacturing machine 102, including data 412 associated with or generated by the controller 400, an additive manufacturing machine 102, the energy beam system 134, one or more irradiation devices 142, one or more beam generation devices 300, one or more optical modulators 302, the management system 106, the user interface 108, or a computing device 404, such as operational data 412 and/or calibration data 412 pertaining thereto. The data 412 may also include other data sets, parameters, outputs, information, associated with an additive manufacturing system 100 or an additive manufacturing machine 102.

The one or more computing devices 404 may also include a communication interface 416, which may be used for communications with a communication network 418 via wired or wireless communication lines 420. The communication interface 416 may include any suitable components for interfacing with one or more network(s), including for example, transmitters, receivers, ports, controllers, antennas, or other suitable components. The communication interface 416 may allow the computing device 404 to communicate with various nodes on the communication network 418, such as nodes associated with the additive manufacturing machine 102, the energy beam system 134, the one or more irradiation devices 142, the one or more beam generation devices 300, the one or more optical modulators 302, the management system 106, the user interface 108, or any combination of the foregoing. The communication network 418 may include, for example, a local area network (LAN), a wide area network (WAN), SATCOM network, VHF network, a HF network, a Wi-Fi network, a WiMAX network, a gatelink network, and/or any other suitable communication network 418 for transmitting messages to and/or from the controller 400 across the communication lines 420. The communication lines 420 of communication network 418 may include a data bus or a combination of wired and/or wireless communication links.

The communication interface 416 may allow the computing device 404 to communicate with various components of an additive manufacturing system 100 and/or an additive manufacturing machine 102 communicatively coupled with the communication interface 416 or communicatively coupled with one another. The communication interface 416 may additionally or alternatively allow the computing device 404 to communicate with the management system 106, the user interface 108, or both. The management system 106 may include a server 422 or a data warehouse 424, or both. As an example, at least a portion of the data 412 may be stored in the data warehouse 424, and the server 422 may be configured to transmit data 412 from the data warehouse 424 to the computing device 404, or to receive data 412 from the computing device 404, or both, and to store the received data 412 in the data warehouse 424 for further purposes. The server 422 and/or the data warehouse 424 may be implemented as part of a control system 104, as part of the management system 106, or both.

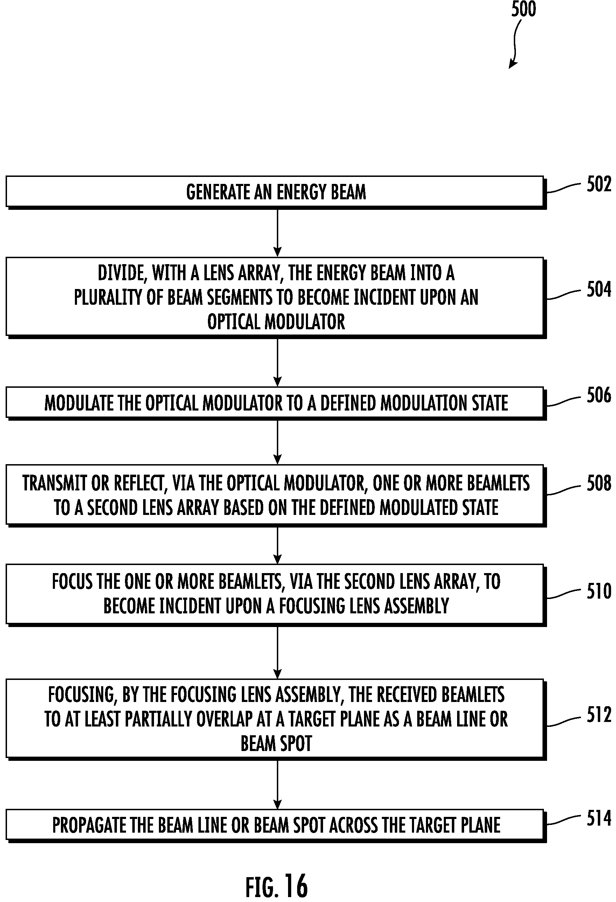

Now turning to FIG. 16, an exemplary method 500 of additively manufacturing a three-dimensional object will be described. Exemplary methods may be performed at least in part by the control system 104, the controller 400, one or more control modules 402 associated with the control system 104 or the controller 400, or any combination of the foregoing. Additionally, or in the alternative, exemplary methods may be performed at least in part by an additive manufacturing system or an additive manufacturing machine 102, for example, by the control system 104 or the controller 400 associated therewith.

As shown in FIG. 16, the exemplary method 500 may include, at block 502, generating an energy beam (e.g., energy beam 144) with the beam generation device 300. The energy beam 144 may become incident upon a first lens array disposed downstream from the beam generation device 300 (e.g., the lens array 326). The method 500 may include, at block 504, dividing, with the first lens array, the energy beam into a plurality of beam segments (e.g., the beam segments 330). The beam segments may become incident upon an optical modulator (e.g., the optical modulator 302). The method 500 may include, at block 506, modulating respective ones of the pixels or micromirror elements of the optical modulator according to beam modulation instructions defining a modulation state of the optical modulator.

The method 500 may include, at block 508, selectively transmitting or reflecting, via the optical modulator, one or more portions of the received beam segments as beam channels or beamlets (e.g., the beamlets 331) based on the modulated state of the optical modulator. The beamlets are output by the optical modulator based on a modulated state of pixels or micromirror elements of the optical modulator corresponding to a desired beam intensity, profile, or both, of the energy beam at a target plane (e.g., the build plane 130). The beamlets output by the optical modulator may become incident upon a second lens array (e.g., the lens array 328) disposed downstream from the optical modulator. The method 500 may include, at block 510, focusing the one or more beamlets, via a second lens array (e.g., the lens array 328) to become incident upon a projection lens or focusing lens assembly (e.g., the focusing lens assembly 312). The method 500 may include, at block 512, focusing the received beamlets (e.g., via the focusing lens assembly 312) to at least partially overlap with one another in a target plane (e.g., the build plane 130) as a beam line or beam spot. The method 500 may include, at block 514, propagating the beam line or beam spot across the target plane by way of relative motion between the target plane and the beam line or beam spot. The beam line or beam spot may correspond to the combination zone 334. The target plane (e.g., the build plane 130) may include a build array defining a plurality of build points. Respective ones of the plurality of build points may receive irradiation from the beam line or beam spot corresponding to the combination zone 334.

Further aspects of the presently disclosed subject matter are provided by the following clauses:
An additive manufacturing system for additively manufacturing a three-dimensional object, the additive manufacturing system comprising: a beam generation device; a first lens array disposed downstream from the beam generation device, the first lens array positioned to an energy beam received from the beam generation device into a plurality of beam segments; an optical modulator disposed downstream from the first lens array, wherein the optical modulator is modulated to reflect or transmit one or more beamlets from the plurality of beam segments incident on the optical modulator; a second lens array disposed downstream from the optical modulator, the one or more beamlets incident upon the second lens array; and a focusing lens assembly disposed downstream from the second lens array, wherein the one or more beamlets projected from the second lens array become incident on the focusing lens assembly, and wherein the focusing lens assembly converges the one or more beamlets in a target plane.

The additive manufacturing system of the preceding clause, wherein the first lens array comprises a cylindrical lens array or a square lens array.

The additive manufacturing system of any preceding clause, wherein the second lens array comprises a cylindrical lens array or a square lens array.

The additive manufacturing system of any preceding clause, wherein the optical modulator comprises a reflective optical modulator or a transmissive optical modulator.

The additive manufacturing system of any preceding clause, further comprising a controller to modulate the optical modulator according to beam modulation instructions defining a modulation state corresponding to the one or more beamlets.

The additive manufacturing system of any preceding clause, wherein the optical modulator comprises an array of pixels configured to reflect or transmit the one or more beamlets incident upon the second lens array.

The additive manufacturing system of any preceding clause, further comprising a controller to modulate the array of pixels according to beam modulation instructions defining a modulation state corresponding to the one or more beamlets.

The additive manufacturing system of any preceding clause, wherein the optical modulator comprising a micromirror array, the micromirror array comprising a plurality of micromirror elements configured to reflect the select beam segments along respective beam segment paths incident upon the second lens array.

The additive manufacturing system of any preceding clause, further comprising a controller to modulate the plurality of micromirror elements according to beam modulation instructions defining a modulation state corresponding to the one or more beamlets.

The additive manufacturing system of any preceding clause, further comprising one or more prisms disposed upstream of the second lens array.

The additive manufacturing system of any preceding clause, wherein the one or more prisms are disposed upstream of the first lens array or downstream of the first lens array.

The additive manufacturing system of any preceding clause, further comprising a beam collimator disposed upstream of the first lens array.

The additive manufacturing system of any preceding clause, further comprising a beam shaping optical element disposed upstream of the first lens array.

The additive manufacturing system of any preceding clause, wherein the first and second lens arrays each comprise a cylindrical lens array, and wherein the focusing lens assembly is configured to converge the one or more beamlets into a beam line at the target plane.

The additive manufacturing system of any preceding clause, wherein the optical modulator comprises a plurality of pixels, and wherein the beam line comprises a varying intensity distribution across the beam line based on a modulation state of select pixels of the plurality of pixels.

The additive manufacturing system of any preceding clause, wherein the first and second lens arrays each comprise a square lens array, and wherein the focusing lens assembly is configured to converge the one or more beamlets into at least one of a square beam spot or a rectangular beam spot.

The additive manufacturing system of any preceding clause, wherein the optical modulator comprises a plurality of pixels, and wherein the rectangular beam spot comprises a varying intensity distribution across the rectangular beam spot based on a modulation state of select pixels of the plurality of pixels.

The additive manufacturing system of any preceding clause, wherein the focusing lens assembly comprises a Fourier lens.

The additive manufacturing system of any preceding clause, wherein a focal length of the first lens array is equal to a focal length of the second lens array.

The additive manufacturing system of any preceding clause, wherein a focal length of the first lens array is greater than or less than to a focal length of the second lens array.

A method of additively manufacturing a three-dimensional object, the method comprising: generating an energy beam with a beam generation device; dividing, with a first lens array, the energy beam into a plurality of beam segments incident upon an optical modulator disposed downstream from the first lens array; directing, via the optical modulator, one or more beamlets incident on a second lens array disposed downstream from the optical modulator from the plurality of beam segments; and converging the one or more beamlets in a target plane.

The method of any preceding clause, wherein the optical modulator comprises a plurality of pixels, and further comprising modulating select pixels of the plurality of pixels according to beam modulation instructions to create the one or more beamlets.

The method of claim any preceding clause, wherein the first and second lens arrays each comprise a cylindrical lens array, and further comprising converging the one or more beamlets into a beam line at the target plane.

The method of any preceding clause, wherein the first and second lens arrays each comprise a square cylindrical lens array, and further comprising converging the one or more beamlets into a rectangular beam spot at the target plane.

The method of any preceding clause, wherein dividing, with the first lens array, comprises dividing, with a cylindrical lens array.

The method of any preceding clause, wherein dividing, with the first lens array, comprises dividing, with a square lens array.

The method of any preceding clause, wherein the optical modulator comprises a plurality of micromirror elements, and further comprising modulating select micromirror elements of the plurality of micromirror elements according to beam modulation instructions to create the one or more beamlets.

An additive manufacturing system for additively manufacturing a three-dimensional object, the additive manufacturing system comprising: a beam generation device; a first lens array disposed downstream from the beam generation device, the first lens array comprising a first plurality of lenses to divide an energy beam received from the beam generation device into a plurality of beam segments; an optical modulator disposed downstream from the first lens array to receive the plurality of beam segments, the optical modulator comprising a plurality of pixels; a second lens array disposed downstream from the optical modulator, the second lens array comprising a second plurality of lenses; a focusing lens assembly disposed downstream from the second lens array; and a controller configured to modulate select ones of the plurality of pixels; wherein the optical modulator is configured to direct one or more beamlets incident upon the second plurality of lenses based on a modulation state of the select ones of the plurality of pixels; and wherein the focusing lens assembly receives the one or more beamlets from the second plurality of lenses and converges the one or more beamlets in a target plane.

The additive manufacturing system of any preceding clause, wherein at least one of the first lens array or the second lens array is a cylindrical lens array.

The additive manufacturing system of any preceding clause, wherein at least one of the first lens array or the second lens array is a square lens array.

The additive manufacturing system of any preceding clause, further comprising a prism assembly disposed upstream of the second lens array.

An irradiation device for additively manufacturing three-dimensional objects, the irradiation device comprising: a first lens array comprising a plurality of first lenses configured to receive an energy beam and divide the energy beam into a plurality of beam segments; an optical modulator disposed downstream from the first lens array to receive the plurality of beam segments; a second lens array disposed downstream from the optical modulator, the second lens array comprising a plurality of second lenses; and a focusing lens assembly disposed downstream from the second lens array; and wherein the optical modulator is modulated to reflect or transmit one or more beamlets from the plurality of beam segments incident upon one or more second lenses of the plurality of the second lenses; and wherein the focusing lens assembly is configured to receive the one or more beamlets from the one or more second lenses and overlap the one or more beamlets in a target plane.

The irradiation device of any preceding clause, further comprising a controller configured to cause the irradiation device to perform an irradiation sequence, the irradiation sequence comprising controlling a modulation state of the optical modulator to create the one or more beamlets.

The irradiation device of any preceding clause, wherein the optical modulator comprises at least one of a reflective optical modulator or a transmissive optical modulator.

An additive manufacturing system for additively manufacturing a three-dimensional object, the additive manufacturing system comprising: a beam generation device to generate an energy beam; a first lens array disposed downstream from the beam generation device, the first lens array positioned to receive the energy beam and divide the energy beam into a plurality of beam segments; an optical modulator disposed downstream from the first lens array to receive the plurality of beam segments; a second lens array disposed downstream from the optical modulator; a focusing lens assembly disposed downstream from the second lens array; and a controller configured to control a modulation state of the optical modulator, the modulation state configured to reflect or transmit one or more beamlets incident upon the second lens array from the plurality of beam segments received by the optical modulator; and wherein the focusing lens assembly converges the one or more beamlets in a target plane.

The additive manufacturing system of any preceding clause, wherein the controller is configured to control the modulation state of the optical modulator according to beam modulation instructions.

The additive manufacturing system of any preceding clause, wherein the controller is configured to control the modulation state of the optical modulator such that at least one of a square beam spot or a rectangular beam spot is produced at a target plane.

The additive manufacturing system of any preceding clause, wherein the controller is configured to control the modulation state of the optical modulator such that the rectangular beam spot comprises a varying intensity distribution across the rectangular beam spot.

An additive manufacturing system for additively manufacturing a three-dimensional object, the additive manufacturing system comprising: a beam generation device to generate an energy beam; a first lens array disposed downstream from the beam generation device, the first lens array positioned to receive the energy beam and divide the energy beam into a plurality of beam segments; an optical modulator disposed downstream from the first lens array to receive the plurality of beam segments; a second lens array disposed downstream from the optical modulator; a focusing lens assembly disposed downstream from the second lens array; and a non-transitory computer readable medium comprising instructions executable by one or more processors, the instructions executable by the one or more processors to cause the one or more processor to control a modulation state of the optical modulator, the modulation state configured to reflect or transmit one or more beamlets incident upon the second lens array from the plurality of beam segments received by the optical modulator; and wherein the focusing lens assembly converges the one or more beamlets in a target plane.

This written description uses exemplary embodiments to describe the presently disclosed subject matter, including the best mode, and also to enable any person skilled in the art to practice such subject matter, including making and using any devices or systems and performing any incorporated methods. The patentable scope of the presently disclosed subject matter is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. An additive manufacturing system for additively manufacturing a three-dimensional object, the additive manufacturing system comprising:
a beam generation device;
a first lens array disposed downstream from the beam generation device, the first lens array positioned to divide an energy beam received from the beam generation device into a plurality of beam segments;
an optical modulator disposed downstream from the first lens array, wherein the optical modulator is modulated to reflect or transmit one or more beamlets from the plurality of beam segments incident on the optical modulator;
a second lens array disposed downstream from the optical modulator, the one or more beamlets incident upon the second lens array; and
a focusing lens assembly disposed downstream from the second lens array, wherein the one or more beamlets projected from the second lens array become incident on the focusing lens assembly, and wherein the focusing lens assembly converges the one or more beamlets in a target plane.

2. The additive manufacturing system of claim 1, wherein the first lens array comprises a cylindrical lens array or a square lens array.

3. The additive manufacturing system of claim 2, wherein the second lens array comprises a cylindrical lens array or a square lens array.

4. The additive manufacturing system of claim 1, wherein the optical modulator comprises a reflective optical modulator or a transmissive optical modulator.

5. The additive manufacturing system of claim 1, further comprising a controller to modulate the optical modulator according to beam modulation instructions defining a modulation state corresponding to the one or more beamlets.

6. The additive manufacturing system of claim 1, wherein the optical modulator comprises an array of pixels configured to reflect or transmit the one or more beamlets incident upon the second lens array.

7. The additive manufacturing system of claim 6, further comprising a controller to modulate the array of pixels according to beam modulation instructions defining a modulation state corresponding to the one or more beamlets.

8. The additive manufacturing system of claim 1, further comprising one or more prisms disposed upstream of the second lens array.

9. The additive manufacturing system of claim 8, wherein the one or more prisms are disposed upstream of the first lens array or downstream of the first lens array.

10. The additive manufacturing system of claim **1,** wherein the first and second lens arrays each comprise a cylindrical lens array, and wherein the focusing lens assembly is configured to converge the one or more beamlets into a beam line at the target plane.

11. The additive manufacturing system of claim 10, wherein the optical modulator comprises a plurality of pixels, and wherein the beam line comprises a varying intensity distribution across the beam line based on a modulation state of select pixels of the plurality of pixels.

12. The additive manufacturing system of claim 1, wherein the first and second lens arrays each comprise a square lens array, and wherein the focusing lens assembly is configured to converge the one or more beamlets into at least one of a square beam spot or a rectangular beam spot.

13. The additive manufacturing system of claim 12, wherein the optical modulator comprises a plurality of pixels, and wherein the rectangular beam spot comprises a varying intensity distribution across the rectangular beam spot based on a modulation state of select pixels of the plurality of pixels.

14. A method of additively manufacturing a three-dimensional object, the method comprising:
generating an energy beam with a beam generation device;
dividing, with a first lens array, the energy beam into a plurality of beam segments incident upon an optical modulator disposed downstream from the first lens array;
directing, via the optical modulator, one or more beamlets incident on a second lens array disposed downstream from the optical modulator from the plurality of beam segments received by the optical modulator; and
converging the one or more beamlets in a target plane.

15. The method of claim 14, wherein the optical modulator comprises a plurality of pixels, and further comprising modulating select pixels of the plurality of pixels according to beam modulation instructions to create the one or more beamlets; or wherein the first and second lens arrays each comprise a cylindrical lens array, and further comprising converging the one or more beamlets into a beam line at the target plane, or wherein the first and second lens arrays each comprise a square lens array, and further comprising converging the one or more beamlets into at least one of a square beam spot or a rectangular beam spot at the target plane.
